# EUROPEAN PATENT SPECIFICATION

(11) **EP 3 865 958 B1**
(45) Date of publication and mention of the grant of the patent: **28.01.2026**
(21) Application number: 21155628.7
(22) Date of filing: 05.02.2021
(51) Int. Cl.: G05B 15/02

(54) **HVAC SYSTEM CONFIGURATION WITH AUTOMATIC SCHEMATICS AND GRAPHICS GENERATION**
KONFIGURATION EINES HLK-SYSTEMS MIT AUTOMATISCHEN SCHEMATA UND GRAFIKERZEUGUNG
CONFIGURATION DE SYSTÈME CVC AVEC GÉNÉRATION AUTOMATIQUE DE SCHÉMAS ET DE GRAPHIQUES

(30) Priority: 11.02.2020 US 202016788206
(43) Date of publication of application: 18.08.2021
(73) Proprietor: Honeywell International Inc., Charlotte, NC 28202 (US)
(72) Inventor: POLURI, Nagasree, Charlotte, North Carolina 28202 (US); MURALI, Sasikala, Charlotte, North Carolina 28202 (US); KM, Sabari Nivash, Charlotte, North Carolina 28202 (US); RAMACHANDRAN, Vivek, Charlotte, North Carolina 28202 (US)
(74) Representative: Haseltine Lake Kempner LLP

(56) References cited:
- WO-A1-2005/109122
- US-A1- 2006 058 923
- US-A1- 2017 038 945
- US-A1- 2018 217 621

## Description

### Technical Field

The present disclosure relates generally to configuring a heating, ventilation and air conditioning (HVAC) system. More particularly, the present disclosure relates to methods and systems for configuring an HVAC system in which component properties are automatically generated.

### Background

An HVAC system can include a large number of individual components that must be configured to work together. This can include defining a set of properties for the individual components. This can be a time-consuming and error-prone process. There is a need for an improved way of designing and configuring an HVAC system.

US 2006/058923 A1 discloses building automation systems dynamically configured according to rules for identifying building automation equipment. The rules define allowable configurations for a system based first on mechanical equipment, associated control strategies, and options for end control devices. A set of selections having default conditions may be followed to create a functional system.

US 2018/217621 A1 discloses systems and methods for HVAC system design and zone group management. A floor plan of a building is received, and an HVAC system configuration is selected from among a set of template HVAC configurations. HVAC components are selected from set of template HVAC components to customize the configuration.

US 2017/038945 A1 discloses methods, devices, and systems for creating a domain visualization. One method includes receiving a selection of a particular visualization template from a plurality of visualization templates, receiving instance information associated with a domain specified by the template from an instance source, receiving operating information from at least one instance of the domain, and displaying a visualization of the domain using the template, the instance information. and the operating information.

WO 2005/109122 A1 discloses smart graphic elements for use as portions or components of one or more graphic displays, which may be executed in a process plant to display information to users about the process plant environment, such as the current state of devices within the process plant.

### Summary

The present invention is defined by the independent claims, to which refence should now be made. Advantageous embodiments are set out in the dependent claims.

### Brief Description of the Figures

The disclosure may be more completely understood in consideration of the following description of various examples in connection with the accompanying drawings, in which:
Figure 1 is a schematic block diagram of an illustrative system for configuring a building control system;
Figure 2 is a schematic block diagram of an illustrative system including an HVAC system and an engineering tool usable to configure the HVAC system;
Figures 3 through 14 are flow diagrams showing illustrative methods that may be carried out by the illustrative system of Figure 2; and
Figures 15 through 33 are illustrative screen captures provided by an engineering tool being used to initially configure a building management system.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the scope of the claims.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

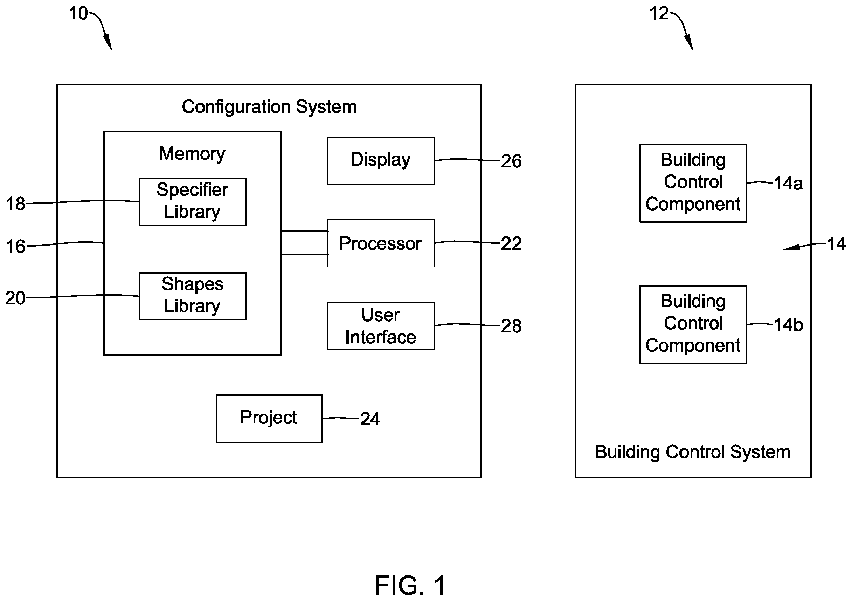

Figure 1 is a schematic block diagram of an illustrative configuration system 10 for configuring an illustrative building control system 12. The building control system 12 may control the operation of any of a number of different building systems. For example, the building control system 12 may control a security system, a lighting system, a heating, ventilation and air conditioning (HVAC) system and the like. Accordingly, the building control system 12 may include any number of building control components 14. While two building control components 14a and 14b are illustrated, it will be appreciated that this is merely illustrative. Some building control systems may include tens, hundreds or even thousands of individual building control components 14.

The configuration system 10 may include a memory 16 for storing a Specifier Library 18 that includes specifier options for a plurality of building control components 14. When a user selects a particular building control component 14, the Specifier Library 18 can provide configuration details for that particular building control component 14, including but not limited to identifying particular additional components that are used in combination with that particular building control component 14, settings for the additional components and of course settings for the particular building control component 14. The memory 16 may also store a Shapes Library 20 that includes Shapes corresponding to the specifier options.

As a user makes selections of particular building control components 14, the configuration system 10 may build a project 24 that includes all of the selected building control components 14. The project 24 also includes images that represent the selected building control components 14. In some cases, the project 24 includes two dimensional schematic diagrams that show each of the selected building control components 14 and how they are connected to each other. Two dimensional schematic diagrams may include templates for one or more than one different schematic protocols. For example, European protocols may vary from American protocols. In some cases, there may be different standards, such as but not limited to DIN and ASHRAE, which may be included in the Shapes Library 20.

The configuration system 10 also includes a processor 22 that is operably coupled to the memory 16. The processor 22 may be configured to accept a user selection of a building control component 14 that will be part of the building control system 12. In some cases, as illustrated, the configuration system 10 may include both a display 26 and a user interface 28. In some cases, the user interface 28 may itself include a display, in which case the configuration system 10 may not include a separate display 26. The user interface 28 may include any variety of data entry provisions, such as but not limited to a keyboard, a mouse, a trackball, a sketch pad and the like.

The processor 22 may be configured to display on the display 26 one or more options for the selected building control component 14, the one or more options determined by a set of rules included in the Specifier Library. The rules may dictate, for example, which other components are used with the selected building control component 14, as well as providing allowable ranges or parameter setting vales for the selected building control component 14. The processor 22 is configured to accept selections of one or more options by the user and to create one or more points based on the user selections, each of the one or more points having one or more point parameter values, the one or more point parameter values automatically populated from information stored within the Specifier Library 18.

In some cases, the processor 22 is also configured to automatically load Shapes from the Shapes Library 20 that corresponding to the selected building control component 14 and the one or more of the selected available options for the selected building control component 14 as well as to create a displayable graphical representation of the building control component 14 using the Shapes loaded from the Shapes Library 20. The graphical representation may be considered as being part of the project 24. The configuration system 10 may also output the displayable graphical representation of the building control component 14. The displayable graphical representation of the building control component 14 may be a two dimensional schematic representation. In some cases, the displayable graphical representation of the building control component 14 may be a three dimensional graphical representation that includes one or more updatable point values associated with the building control component 14.

In some cases, the one or more point parameter values for at least some of the one or more points include a point type and a point name, and the processor 22 may be configured to automatically populate the point name and the point type from information stored within the Specifier Library 18. The processor 22 may be further configured to automatically generate a listing of building control components 14 needed for the building control system 12, for example. In some cases, the processor 22 may be further configured to automatically associate each of the one or more points with a corresponding one of the building control components 14 in the listing of building control components.

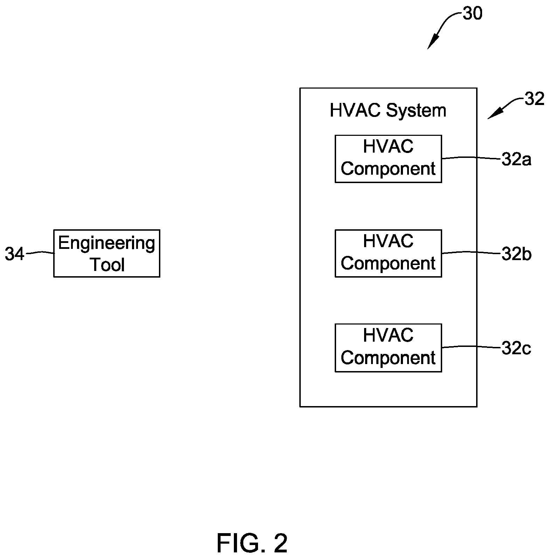

Figure 2 is a schematic block diagram of an HVAC system 30 that includes a number of HVAC components 32. While a total of three HVAC components 32a, 32b and 32c are shown, it will be appreciated that this is merely illustrative as the HVAC system 30 may include any number of different HVAC components 32. The HVAC system 30 may be considered as being an example of the building control system 12 shown in Figure 1. Figure 2 also includes an engineering tool 34. The engineering tool 34 may be considered as being an example of the configuration system 10 shown in Figure 1, and may be considered as including all of the functionality and abilities of the configuration system 10.

The engineering tool 34 may be used by a technician to enter and/or otherwise provide all of the information necessary to design the building control system 12 (Figure 1) or the HVAC system 30. This may include all of the wiring that extends between the tens, hundreds or even thousands of distinct electronic devices. This information may also include information describing how each of the electronic devices are to be connected, wired and configured. Additional details regarding the engineering tool 34 may be found, for example, in co-pending patent application entitled Managing Certificates in a Building Management System filed on the even date herewith under Application number 16/788,066 (Attorney Docket No. 1456.1380101, Publication number US-20210247731-A1, and Patent number US-11237534-B2) and Using Augmented Reality to Assist in Device Installation filed on the even date herewith under Application number 16/788,119 (Attorney Docket No. 1456.1381101, Publication number US-20210248732-A1, and Patent number US-11526976-B2).

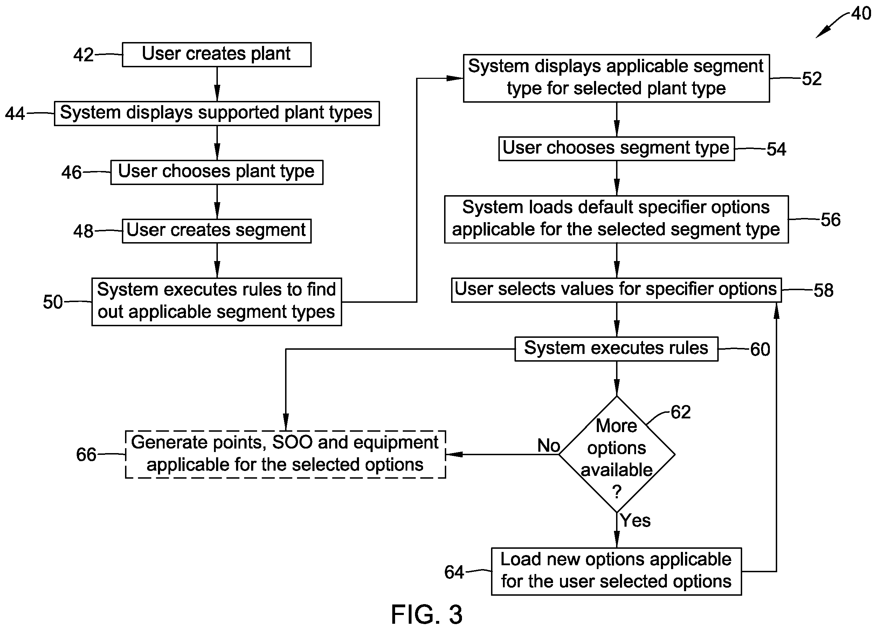

Figure 3 is a flow diagram showing an illustrative method 40 that may be carried out by the configuration system 10 (Figure 1) and/or the engineering tool 34 (Figure 2). The method 40 starts by a user creating a plant, as indicated at block 42. In response, the system displays supported plant types, as indicated at block 44. Examples of plant types may include Air handling units, ventilation, heating, cooling, hydraulic, individual room control, electrical, fan coil unit, and the like. The user selects one of the displayed plant types, as indicated at block 46. The user then creates a segment, as indicated at block 48. These are just examples, and may vary for a particular installation.

Next, at block 50, the system executes rules (stored for example in the Specifier Library 18 in Figure 1) to find out applicable segment types. As an example, assume the plant type selected at block 46 was an Air Handling Unit (AHU). Then, the available segments may include an AHU coil, a HYD valve, an AHU VAV box, an AHU plant strategy, an AHU energy recovery unit, an AHU humidifier, an AHU filter, an AHU multi fan, an AHU fan, a SUB pump, an AHU zone damper, an AHU plant damper, an AHU fire or smoke damper, an AHU sensor, or an AHU sensor or control. The user selects a segment type, as indicated at block 54. In response, the system loads the default specifier options that are applicable for the selected segment type, as indicated at block 56. As an example, if the selected plant is an AHU, and the selected segment is an AHU fan, then the specifier options may include things like location (selectable between outside, return, supply, exhaust, recirculated, smoke fan and the like). Fan option may be selectable between no points, variable speed, 1 stage, 2 stage, 3 stage and the like. Specifier options may be presented using multiple options or Boolean options.

The user selects values for the specifier options, as indicated at block 58. In response, the system executes the applicable rules, as indicated at block 60. At decision block 62, the system determines whether there are additional options available. If so, control passes to block 64 and additional options applicable for the user-selected options are loaded and control then passes back to block 58. If not, control passes to block 66, where the system generates points, Sequence Of Operations (SOO) and equipment applicable for the selected options.

In some cases, the BACnet point type and default values for the properties of each point are defined in the Specifier Library 18 (Figure 1). Accordingly, as points are created, all the properties of each point are automatically configured in accordance with the expected performance of the point. As an example, a fan switch status point will be marked for generating an alarm. A temperature sensor point will have engineering units (F, C, K) designated per region. Data points pertaining to each piece of equipment also get associated in the project 24 (Figure 1) as and when they are created. Default properties (such as but not limited to part number, quantity and accessories) are created automatically.

In some instances, the specifier options included in the Specifier Library 18 may be customizable based on region-specific needs, and/or customer preferences. For example, the text for each specifier option, SOO, point names and the like may be in a particular language. The default properties of each point and the default properties of each piece of equipment (such as part number, accessories, quantities, manufacturer, etc.) may also be customizable. In some cases, the configuration system 10 (Figure 1) and/or the engineering tool 34 (Figure 2) generates the application binary package that will ultimately be downloaded to one or more controllers, including points, SOO, control logic, equipment, I/O terminal assignment and the like.

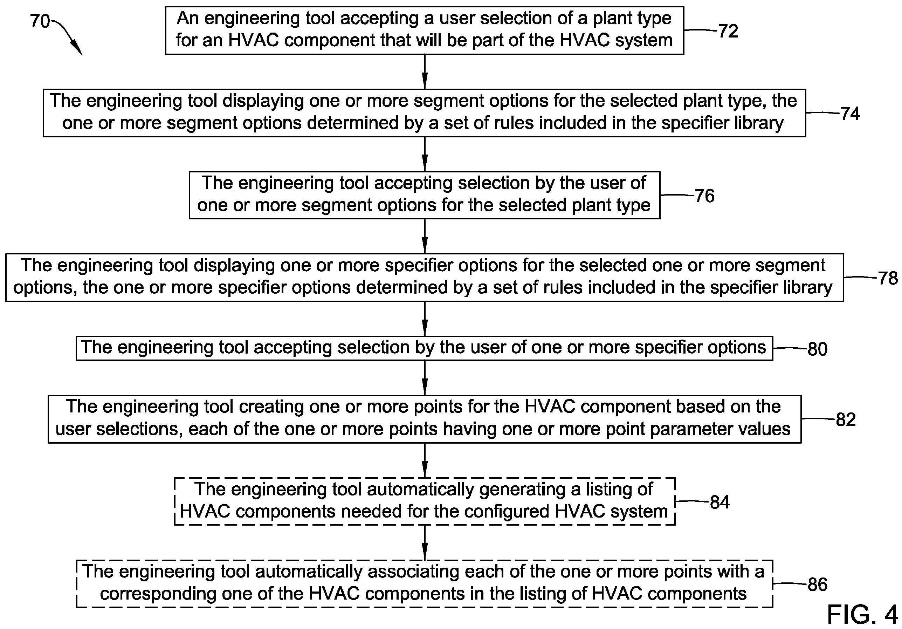

Figure 4 is a flow diagram showing an illustrative method 70 of configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32). An engineering tool (such as the engineering tool 34) accepts a user selection of a plant type for an HVAC component that will be part of the HVAC system, as indicated at block 72. Examples of plant type may be selected from one or more of an Air Handling Unit (AHU), Ventilation equipment, Heating equipment, and Cooling equipment.

The engineering tool displays one or more segment options for the selected plant type, the one or more segment options determined by a set of rules included in the Specifier Library, as indicated at block 74. The engineering tool accepts selection by the user of one or more segment options for the selected plant type, as indicated at block 76. In response, the engineering tool displays one or more specifier options for the selected one or more segment options, the one or more specifier options determined by a set of rules included in the Specifier Library, as indicated at block 78. In some cases, one of the specifier options for one or more segment options may include physical location. The engineering tool accepts selection by the user of one or more specifier options, as indicated at block 80. The engineering tool creates one or more points for the HVAC component based on the user selections, each of the one or more points having one or more point parameter values, as indicated at block 82.

In some cases, and as optionally indicated at block 84, the engineering tool may automatically generate a listing of HVAC components needed for the configured HVAC system. The listing of HVAC components may, for example, be dependent on the selected plant type, the selected segment options and the selected one or more specifier options. In some cases, the engineering tool may automatically add one or more HVAC components to the listing of HVAC components in response to selection by the user of the plant type. The engineering tool may, for example, automatically add one or more HVAC components to the listing of HVAC components in response to selection by the user of one or more segment options for the selected plant type. The engineering tool may, for example, automatically add one or more HVAC components to the listing of HVAC components in response to selection by the user of one or more specifier options. In some cases, and as optionally indicated at block 86, the engineering tool may automatically associate each of the one or more points with a corresponding one of the HVAC components in the listing of HVAC components.

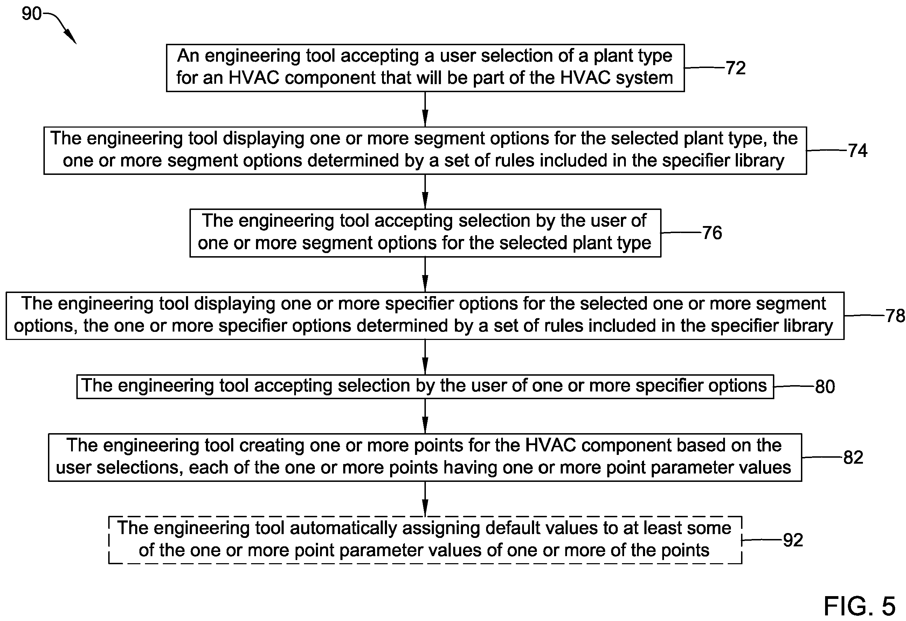

Figure 5 is a flow diagram showing an illustrative method 90 of configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32). An engineering tool (such as the engineering tool 34) accepts a user selection of a plant type for an HVAC component that will be part of the HVAC system, as indicated at block 72. Examples of plant type may be selected from one or more of an Air Handling Unit (AHU), Ventilation equipment, Heating equipment, and Cooling equipment.

The engineering tool displays one or more segment options for the selected plant type, the one or more segment options determined by a set of rules included in the Specifier Library, as indicated at block 74. The engineering tool accepts selection by the user of one or more segment options for the selected plant type, as indicated at block 76. In response, the engineering tool displays one or more specifier options for the selected one or more segment options, the one or more specifier options determined by a set of rules included in the Specifier Library, as indicated at block 78. In some cases, one of the specifier options for one or more segment options may include physical location. The engineering tool accepts selection by the user of one or more specifier options, as indicated at block 80. The engineering tool creates one or more points for the HVAC component based on the user selections, each of the one or more points having one or more point parameter values, as indicated at block 82.

In some cases, as optionally indicated at block 92, the engineering tool may automatically assign default values to at least some of the one or more point parameter values of one or more of the points. The one or more point parameter values may include a point type and a point name, and wherein the engineering tool may automatically assign default values to the point name and the point type of at least some of the one or more points.

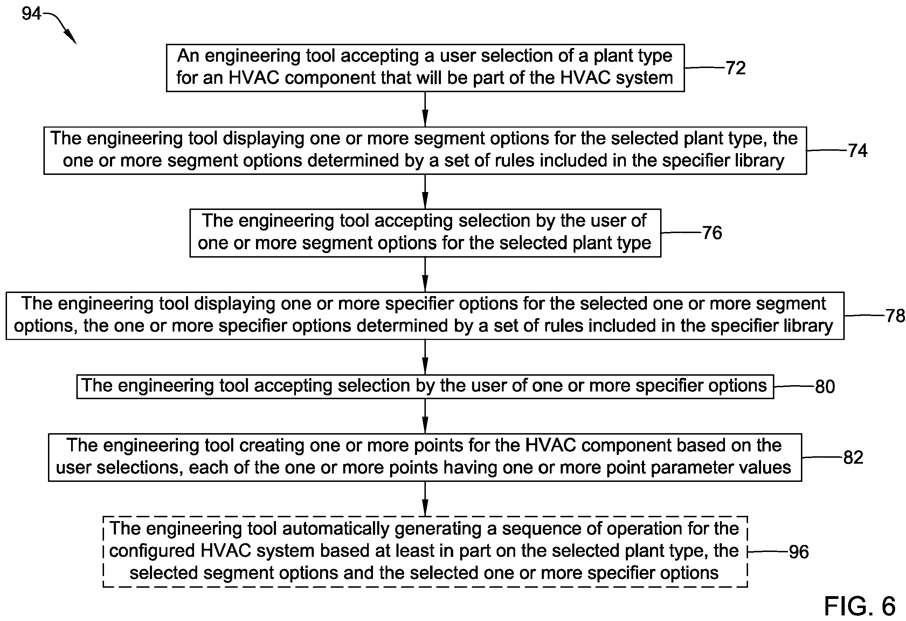

Figure 6 is a flow diagram showing an illustrative method 94 of configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32). An engineering tool (such as the engineering tool 34) accepts a user selection of a plant type for an HVAC component that will be part of the HVAC system, as indicated at block 72. Examples of plant type may be selected from one or more of an Air Handling Unit (AHU), Ventilation equipment, Heating equipment, and Cooling equipment. The engineering tool displays one or more segment options for the selected plant type, the one or more segment options determined by a set of rules included in the Specifier Library, as indicated at block 74. The engineering tool accepts selection by the user of one or more segment options for the selected plant type, as indicated at block 76. In response, the engineering tool displays one or more specifier options for the selected one or more segment options, the one or more specifier options determined by a set of rules included in the Specifier Library, as indicated at block 78. In some cases, one of the specifier options for one or more segment options may include physical location.

The engineering tool accepts selection by the user of one or more specifier options, as indicated at block 80. The engineering tool creates one or more points for the HVAC component based on the user selections, each of the one or more points having one or more point parameter values, as indicated at block 82. In some cases, and as optionally indicated at block 96, the engineering tool may automatically generate a sequence of operation for the configured HVAC system based at least in part on the selected plant type, the selected segment options and the selected one or more specifier options.

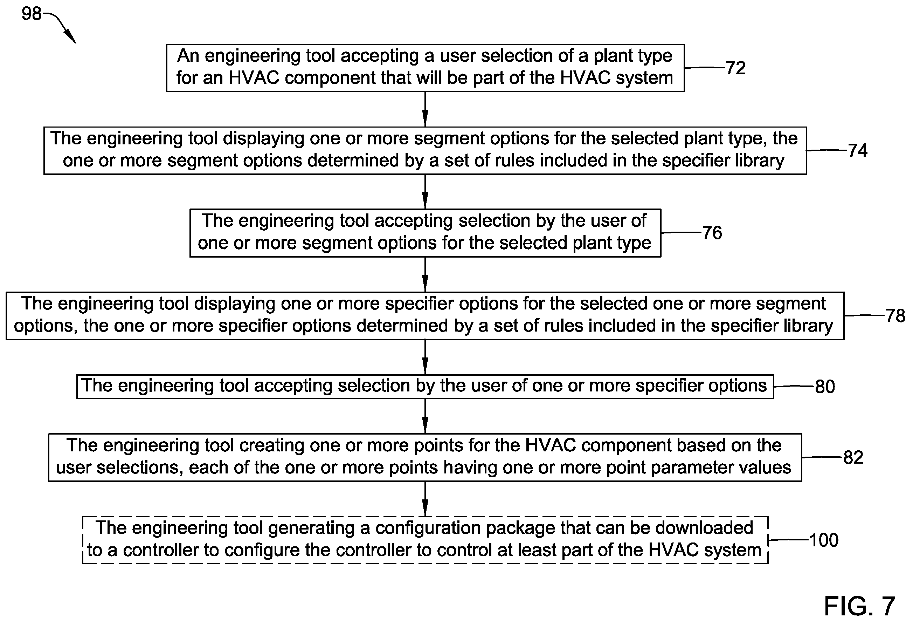

Figure 7 is a flow diagram showing an illustrative method 70 of configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32). An engineering tool (such as the engineering tool 34) accepts a user selection of a plant type for an HVAC component that will be part of the HVAC system, as indicated at block 72. Examples of plant type may be selected from one or more of an Air Handling Unit (AHU), Ventilation equipment, Heating equipment, and Cooling equipment.

The engineering tool displays one or more segment options for the selected plant type, the one or more segment options determined by a set of rules included in the Specifier Library, as indicated at block 74. The engineering tool accepts selection by the user of one or more segment options for the selected plant type, as indicated at block 76. In response, the engineering tool displays one or more specifier options for the selected one or more segment options, the one or more specifier options determined by a set of rules included in the Specifier Library, as indicated at block 78. In some cases, one of the specifier options for one or more segment options may include physical location. The engineering tool accepts selection by the user of one or more specifier options, as indicated at block 80. The engineering tool creates one or more points for the HVAC component based on the user selections, each of the one or more points having one or more point parameter values, as indicated at block 82. In some instances, the engineering tool may generate a configuration package that can be downloaded to a controller to configure the controller to control at least part of the HVAC system, as optionally indicated at block 100.

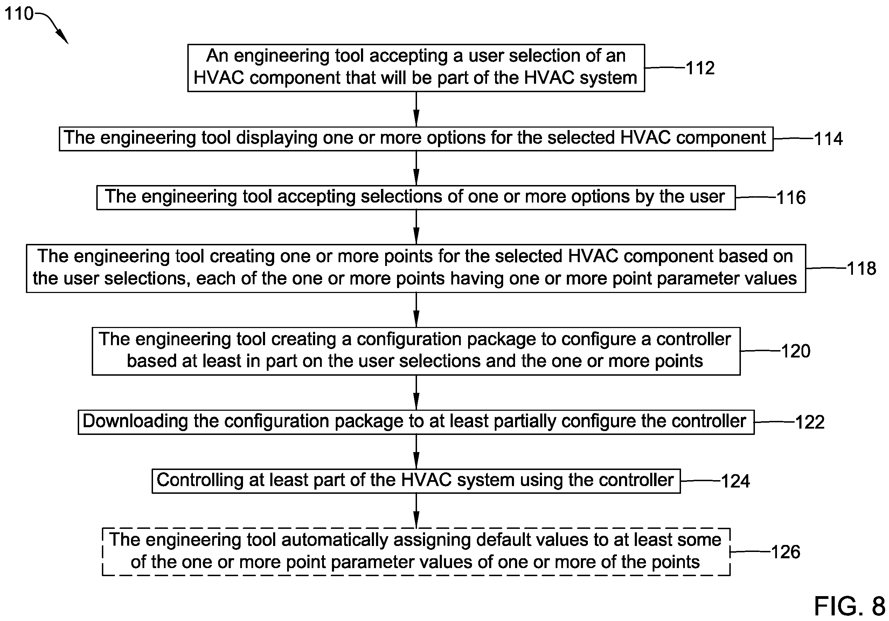

Figure 8 is a flow diagram showing an illustrative method 110 of configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32). An engineering tool accepts a user selection of an HVAC component that will be part of the HVAC system, as indicated at block 112. The engineering tool displays one or more options for the selected HVAC component, as indicated at block 114, and accepts selections of one or more options by the user, as indicated at block 116. The engineering tool creates one or more points for the selected HVAC component based on the user selections, each of the one or more points having one or more point parameter values, as indicated at block 118. As indicated at block 120, the engineering tool creates a configuration package to configure a controller based at least in part on the user selections and the one or more points and, as indicated at block 122, downloads the configuration package to at least partially configure the controller.

The method 110 includes controlling at least part of the HVAC system using the controller, as indicated at block 124. In some cases, and as optionally indicated at block 126, the engineering tool may automatically assigns default values to at least some of the one or more point parameter values of one or more of the points. In some cases, the one or more point parameter values for at least some of the one or more points include a point type and a point name, and wherein the engineering tool automatically assigns default values to the point name and the point type of at least some of the one or more points.

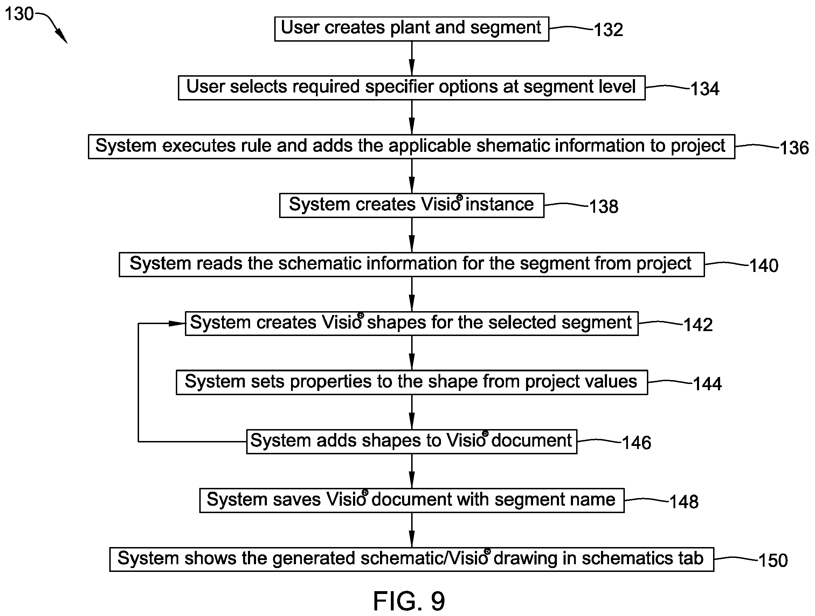

Figure 9 is a flow diagram showing an illustrative method 130 for creating segment schematics. A user creates a plant and segment, as illustrated at block 132, and selects required specifier options at the segment level, as indicated at block 134. The system (such as the configuration system 10 of Figure 1 and/or the engineering tool 34 of Figure 3) executes the rules and adds the applicable schematic information to the project (such as the project 24 shown in Figure 1), as indicated at block 136. Next, the system creates a Visio^{®} instance, as indicated at block 138. In some cases, for example, Visio^{®} may be incorporated into the configuration system 10 (Figure 1) and/or the engineering tool 34 (Figure 2). The system reads the schematic information for the segment from the project, as indicated at block 140. The system creates Visio^{®} shapes for the selected segment, as indicated at block 142, sets properties from project values, as indicated at block 144, and adds shapes to a Visio^{®}document, as indicated at block 146. The steps indicated at blocks 142, 144 and 146 are repeated until all of the schematic records have been processed. The system saves the Visio^{®} with a segment name, as indicated at block 148 and shows the generated schematic under a Schematics tab, as indicated at block 150. The Schematics tab will be illustrated subsequently with respect to a number of screen shots.

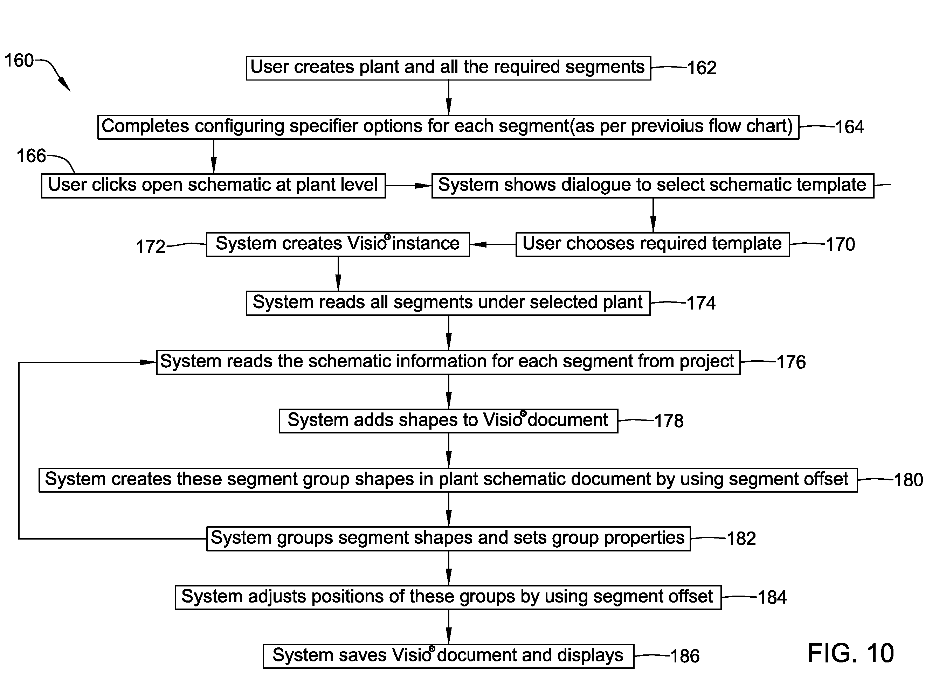

Figure 10 is a flow diagram showing an illustrative method 160 of creating plant schematics. A user creates a plant and all of the required segments, as indicated at block 162. The user finishes configuring all of the specifier options for each segment, as indicated at block 164 and as illustrated in Figure 9. The user clicks Open Schematic at the plant level, as indicated at block 166 and in response, the system (such as the configuration system 10 of Figure 1 and/or the engineering tool 34 of Figure 3) shows Dialog to select Schematic Template, as indicated at block 168. The user choose the required template, as indicated at block 170, and in response, the system creates a Visio^{®} instance, as indicated at block 172.

The system reads all of the segments under the selected plant, as indicated at block 174. Next, for each segment, the system reads the schematic information from the project, as indicated at block 176, adds shapes to the Visio^{®} document, as indicated at block 178, creates segment group shapes in the plant schematic document by using segment offset, as indicated at block 180, and groups segment shapes and sets group properties, as indicated at block 182. These steps indicated at blocks 178, 180 and 182 are repeated until all segments are processed. The system uses segment offset to adjust the positions of each of the groups, as indicated at block 184, and then saves and displays the Visio^{®} document as indicated at block 186.

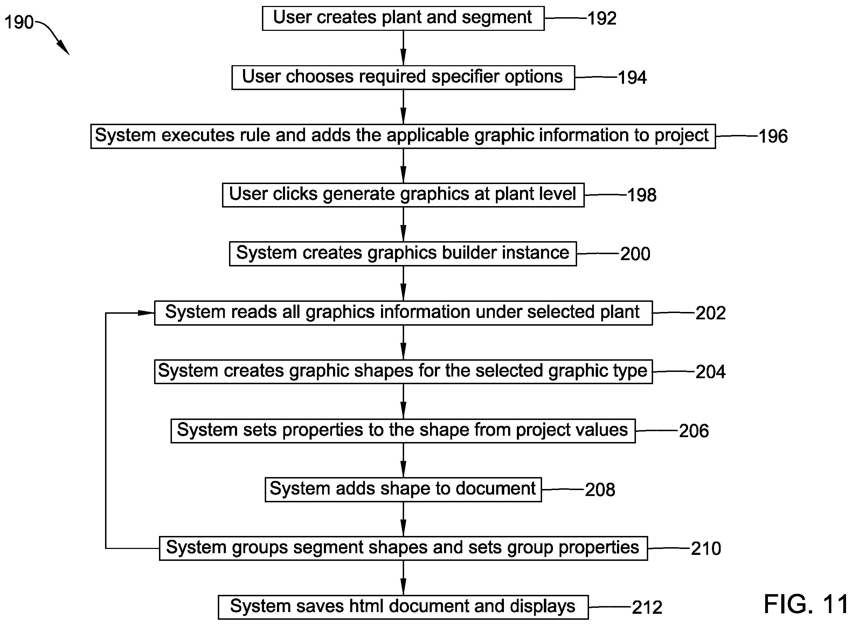

Figure 11 is a flow diagram showing an illustrative method 190 of creating plant graphics. A user creates a plant and segment, as indicated at block 192. The user then chooses the required specifier options, as indicated at block 194. The system (such as the configuration system 10 of Figure 1 and/or the engineering tool 34 of Figure 3) executes the appropriate rules and adds the applicable graphic information to the project (such as the project 24), as indicated at block 196. The user clicks Generate Graphics at Plant Level, as indicated at block 198. In response, the system creates a Graphics builder instance, as indicated at block 200. The system reads all of the graphics information under the selected plant, as indicated at block 202, and then creates graphics shapes for the selected graphics type, as indicated at block 204. At block 206, the system sets properties for the shape that are based on project values. The system adds the shape to the document, as indicated at block 208. At block 210, the system groups segment shapes and sets group properties. It will be appreciated that the steps indicated at blocks 202, 204, 206, 208 and 210 are replicated for all records. At block 212, the system saves the document and displays the document.

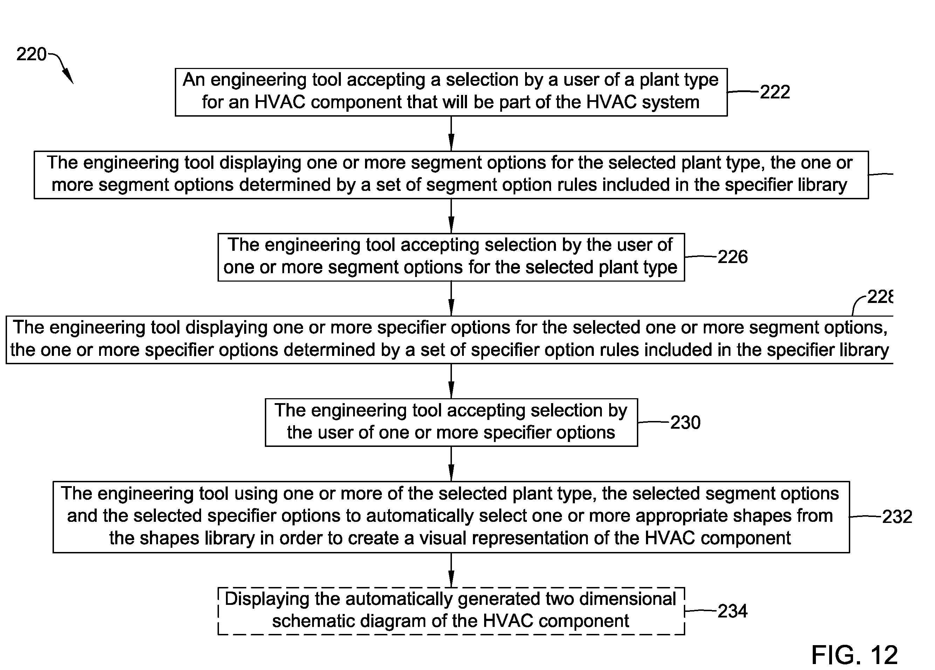

Figure 12 is a flow diagram showing an illustrative method 220 of building a configuration project for configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32) and a Shapes Library (such as the Shapes Library 20) that includes a plurality of representative Shapes. The Shapes Library may include a plurality of two dimensional schematic images. In some cases, the Shapes Library includes a plurality of three dimensional graphics images. In some instances, the Shapes Library may include sets of properties for each of the plurality of representative shapes. The sets of properties for each of the plurality of representative shapes may include one or more of a shape name, a shape position, a size value, a rotation value, an equipment name and a point name, for example.

An engineering tool (such as the engineering tool 34 of Figure 2) accepts a selection by a user of a plant type for an HVAC component that will be part of the HVAC system, as indicated at block 222. In response to the user selecting a plant type for an HVAC component that will be part of the HVAC system, the system automatically loads into the configuration project, from the Shapes Library, two dimensional schematics that correspond to the selected plant type.

The engineering tool displays one or more segment options for the selected plant type, the one or more segment options determined by a set of segment option rules included in the Specifier Library, as indicated at block 224. The engineering tool accepts selection by the user of one or more segment options for the selected plant type, as indicated at block 226. In some cases, and in response to the user selecting one or more segment options, the system automatically loads into the configuration project, from the Shapes Library, two dimensional schematics corresponding to the selected one or more segment options.

Next, the engineering tool displays one or more specifier options for the selected one or more segment options, the one or more specifier options determined by a set of specifier option rules included in the Specifier Library, as indicated at block 228. The engineering tool accepts selection by the user of one or more specifier options, as indicated at block 230. In response to the user selecting one or more specifier options, the system automatically loads into the configuration project, from the Shapes Library, two dimensional schematic that correspond to the selected one or more specifier options.

As indicated at block 232, the engineering tool uses one or more of the selected plant type, the selected segment options and the selected specifier options to automatically select one or more appropriate shapes from the Shapes Library in order to create a visual representation of the HVAC component. In some cases, the visual representation of the HVAC component includes an automatically generated two dimensional schematic diagram of the HVAC component. In some cases, and as optionally indicated at block 234, the system may display the automatically generated two dimensional schematic diagram of the HVAC component.

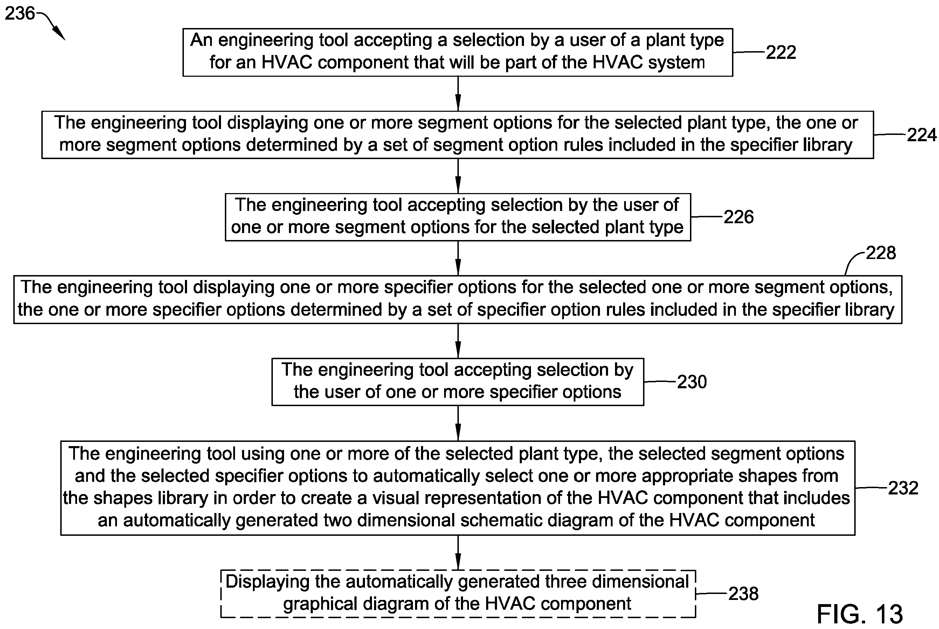

Figure 13 is a flow diagram showing an illustrative method 236 of building a configuration project for configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32) and a Shapes Library (such as the Shapes Library 20) that includes a plurality of representative Shapes. The Shapes Library may include a plurality of two dimensional schematic images. In some cases, the Shapes Library includes a plurality of three dimensional graphics images. In some instances, the Shapes Library may include sets of properties for each of the plurality of representative shapes. The sets of properties for each of the plurality of representative shapes may include one or more of a shape name, a shape position, a size value, a rotation value, an equipment name and a point name, for example.

An engineering tool (such as the engineering tool 34 of Figure 2) accepts a selection by a user of a plant type for an HVAC component that will be part of the HVAC system, as indicated at block 222. The engineering tool displays one or more segment options for the selected plant type, the one or more segment options determined by a set of segment option rules included in the Specifier Library, as indicated at block 224. The engineering tool accepts selection by the user of one or more segment options for the selected plant type, as indicated at block 226. Next, the engineering tool displays one or more specifier options for the selected one or more segment options, the one or more specifier options determined by a set of specifier option rules included in the Specifier Library, as indicated at block 228. The engineering tool accepts selection by the user of one or more specifier options, as indicated at block 230.

As indicated at block 232, the engineering tool uses one or more of the selected plant type, the selected segment options and the selected specifier options to automatically select one or more appropriate shapes from the Shapes Library in order to create a visual representation of the HVAC component. In some cases, the visual representation of the HVAC component may include an automatically generated three dimensional graphical diagram of the HVAC component. As optionally indicated at block 238, the system may display the automatically generated three dimensional graphical diagram of the HVAC component.

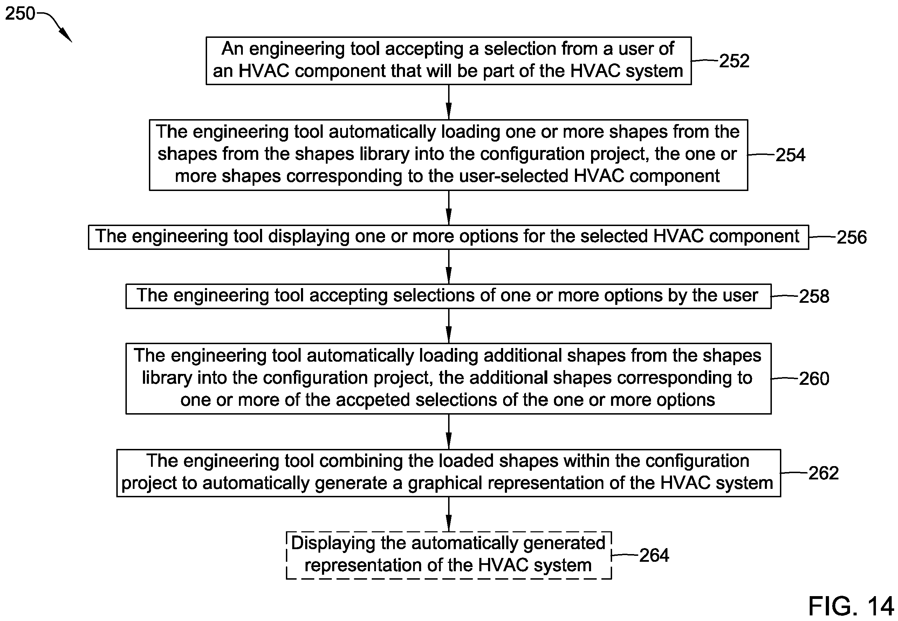

Figure 14 is a flow diagram showing an illustrative method 240 of building a configuration project for configuring a Heating, Ventilation and Air Conditioning (HVAC) system (such as the HVAC system 30) using a Specifier Library (such as the Specifier Library 18) that includes specifier options for a plurality of HVAC components (such as the HVAC components 32) and a Shapes Library (such as the Shapes Library 20) that includes a plurality of representative Shapes. An engineering tool (such as the engineering tool 34 of Figure 2) accepts a selection from a user of an HVAC component that will be part of the HVAC system, as indicated at block 252. The engineering tool automatically loads one or more Shapes from the Shapes Library into the configuration project, the one or more Shapes corresponding to the user-selected HVAC component, as indicated at block 254.

The engineering tool displays one or more options for the selected HVAC component, as indicated at block 256, and accepts selections of one or more options by the user, as indicated at block 258. The engineering tool automatically loads additional Shapes from the Shapes Library into the configuration project, the additional Shapes corresponding to one or more of the accepted selections of the one or more options, as indicated at block 260, and combines the loaded Shapes within the configuration project to automatically generate a graphical representation of the HVAC system, as indicated at block 262. In some cases, as optionally indicated at block 264, the system may display the automatically generated representation of the HVAC system. The automatically generated representation of the HVAC system may include a two dimensional schematic representation. The automatically generated representation of the HVAC system may include a three dimensional graphical representation.

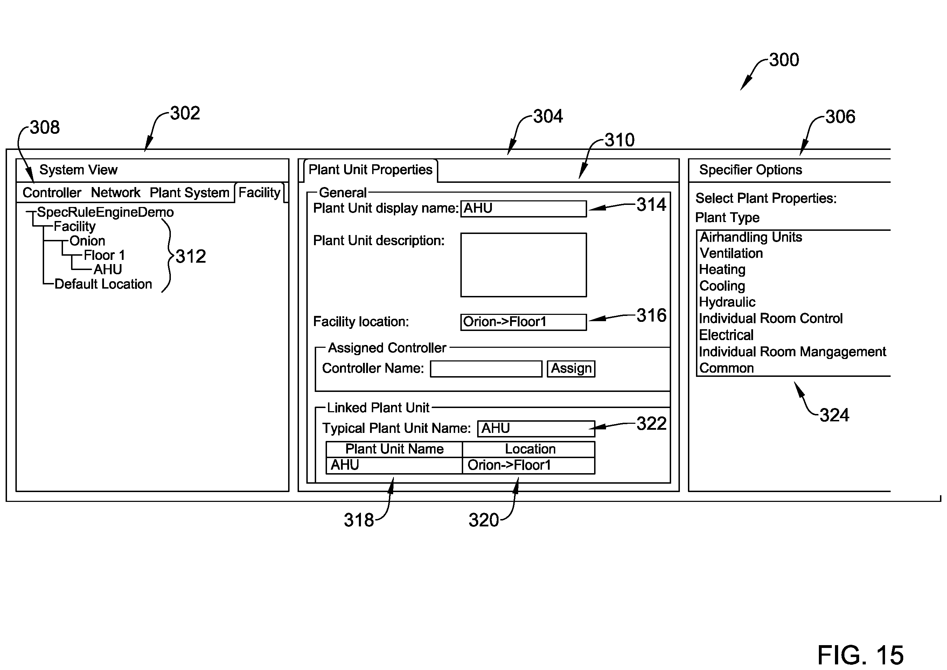

As discussed, the configuration system 10 (Figure 1) and/or the engineering tool 34 (Figure 2) may be used to initially configure the building control system 12 and/or the HVAC system 30. Figures 15 through 33 are screen shots showing illustrative screens that may be displayed by either the configuration system 10 and/or the engineering tool 34. While these screen shots provide examples of illustrative screens that may be displayed while configuring an HVAC system such as the HVAC system 30, it will be appreciated that this is merely illustrative, as other types of building control systems 12 may also be configured in a similar fashion.

Figure 15 is a screen shot showing an illustrative screen 300 that may be displayed by the configuration system 10 and/or the engineering tool 34 when a user is selecting a plant type. The illustrative screen 300 includes a System View window 302, a Properties window 304 and a Specifier Options window 306. The System View window 302 includes a title bar 308 that includes option tabs such as Controller, Network, Plant System and Facility. It can be seen that the Facility tab is currently highlighted. The Properties window 304 includes a title bar 310 that includes option tabs such as Plant Unit Properties, Point Summary, SOO (Sequence of Operations), Schematics, Equipments and Revision. It can be seen that the Plant Unit Properties tab is currently highlighted. The System View window 302 displays a hierarchy 312 that includes Facility\Floor1\AHU. This information is also seen in the Properties window 304, which includes a Plant Unit Display Name 314 reading "AHU" and a Facility Location 316 that reads "Orion->Floor1. The same information is repeated below in the Properties window 304, including a Plant Name 318, Location 320 and Typical Plant Unit Name 322. It can be seen that the Specifiers Options window 306 includes a pull down menu 324 that lists possible plant types.

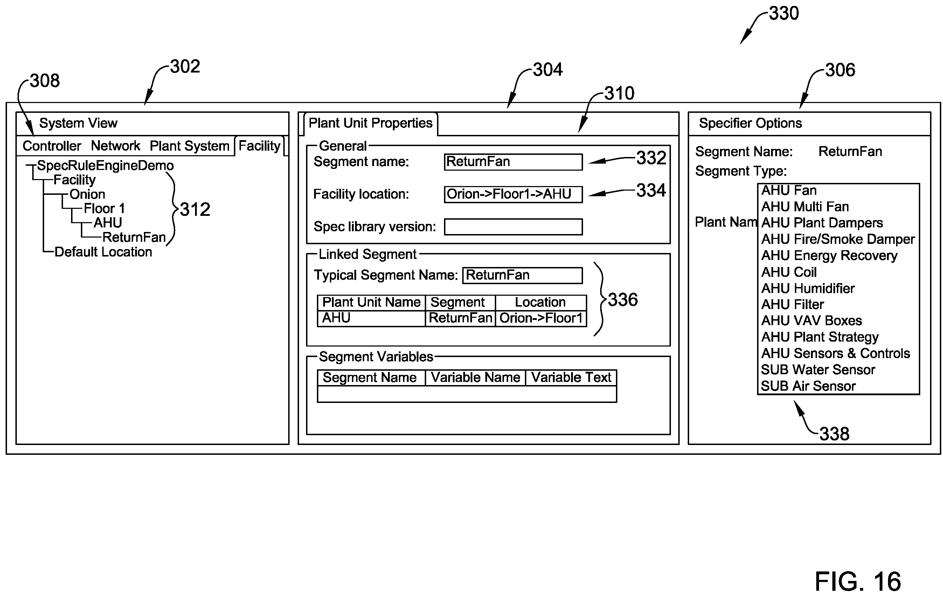

Figure 16 is a screen shot showing an illustrative screen 330 that may be displayed by the configuration system 10 and/or the engineering tool 34 when a user is selecting appropriate segments. The illustrative screen 330 includes a System View window 302, a Properties window 304 and a Specifier Options window 306. The Facility tab is currently highlighted within the title bar 308 of the System View window 302. It will be appreciated, however, that the title bar 310 within the Properties window 304 has changed somewhat from that shown in Figure 15, and now includes option tabs such as Segment Properties, Point Summary, SOO (Sequence of Operations), Schematics, Equipments and Sync. It can be seen that the Segment Properties tab is currently highlighted. The hierarchy 312 displayed within the System View window 302 has been expanded to include Facility\Floor1\AHU\ReturnFan. This information is also seen in the Properties window 304, which includes a Segment name 332 reading "ReturnFan" and a Facility Location 334 that reads "Orion->Floor1->AHU. The same information is repeated below in a region 336 within the Properties window 304. It can be seen that the Specifiers Options window 306 includes a pull down menu 338 that lists possible segment types.

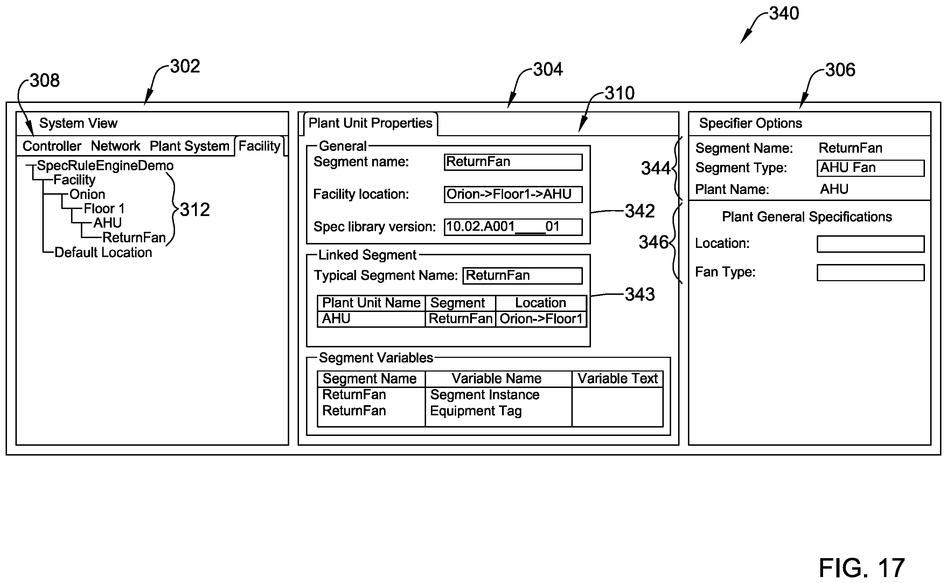

Figure 17 is a screen shot showing an illustrative screen 340 that may be displayed by the configuration system 10 and/or the engineering tool 34 when a user is selecting appropriate segments. The illustrative screen 340 includes a System View window 302, a Properties window 304 and a Specifier Options window 306. The Facility tab is currently highlighted within the title bar 308 of the System View window 302 and the Segment Properties tab is highlighted within the title bar 310 of the Properties window 304. The hierarchy 312 displayed within the System View window 302 includes Facility\Floor1\AHU\ReturnFan. This information is also seen in the Properties window 304, which includes a General information box 342 and a Linked Segment information box 343. It will be appreciated that the data displayed within the General information box 342 and the Linked Segment information box 343 generally matches that shown in the hierarchy 312. The Specifiers Options window 306 includes a first region 344 that identifies the particular segment and a second region 346 that lists relevant specifier options.

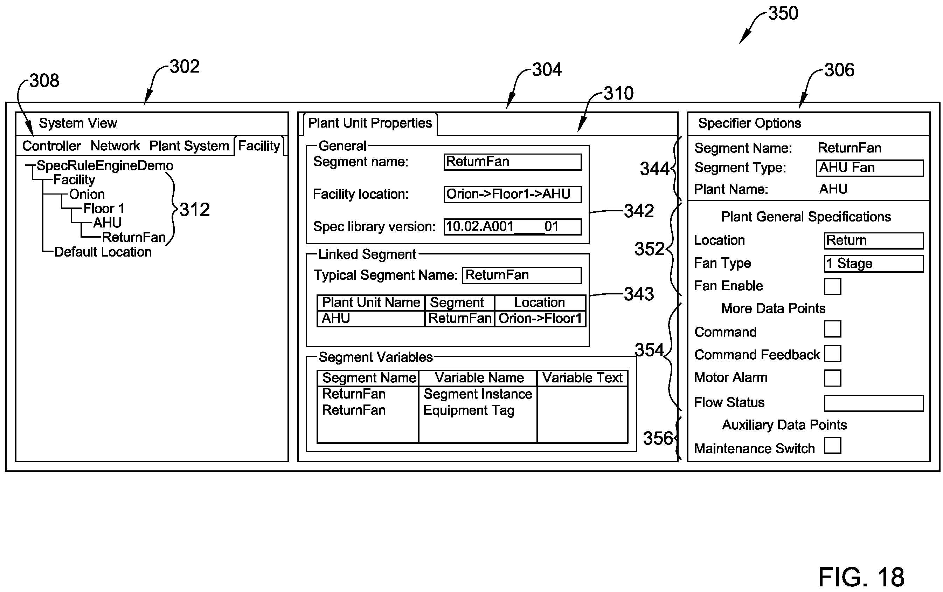

Figure 18 is a screen shot showing an illustrative screen 350 that may be displayed by the configuration system 10 and/or the engineering tool 34 when a user is selecting specifier options. The illustrative screen 350 includes a System View window 302, a Properties window 304 and a Specifier Options window 306. The Facility tab is currently highlighted within the title bar 308 of the System View window 302 and the Segment Properties tab is highlighted within the title bar 310 of the Properties window 304. The hierarchy 312 displayed within the System View window 302 includes Facility\Floor1\AHU\ReturnFan. This information is also seen in the Properties window 304, which includes a General information box 342 and a Linked Segment information box 343. It will be appreciated that the data displayed within the General information box 342 and the Linked Segment information box 343 generally matches that shown in the hierarchy 312. The Specifier Options window 306 includes a first region 344 that identifies the particular segment and several regions that list relevant specifier options. In particular, the Specifiers Options window 306 includes a region 352 listing Plant General Specifications, a region 354 listing Motor Data Points and a region 356 listing Auxiliary Data Points. The Specifier Option window 306 only lists, of course, the specifier options that are appropriate for the particular piece of HVAC equipment.

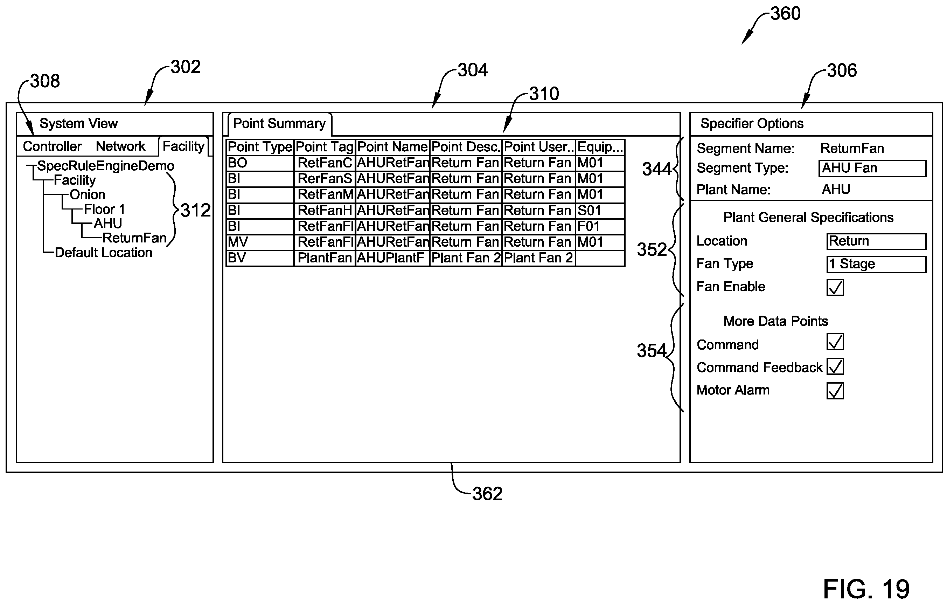

Figure 19 is a screen shot showing an illustrative screen 360 that may be displayed by the configuration system 10 and/or the engineering tool 34 when the system automatically generates a list of Points as specifier options are selected. The illustrative screen 360 includes a System View window 302, a Properties window 304 and a Specifier Options window 306. The Point Summary tab is now highlighted within the title bar 310 of the Properties window 304. The hierarchy 312 displayed within the System View window 302 still includes Facility\Floor NAHU\ReturnFan. The Properties window 304 now includes a Point Summary box 362, that provides a number of features for the Points being generated, including Point Type, Point Tag, Point Name, Point Description, Point User Description, Equipment, Change Status, Element and more. In some cases, there may be more features listed than can be seen in a single screen, and thus a user may have to scroll horizontally and/or vertically to see all of the displayed information. It will be appreciated that as the user makes selections within the Specifier Options window 306, such as within the region 352 listing Plant General Specifications and the region 354 listing Motor Data Points, additional Points will be automatically generated and listed.

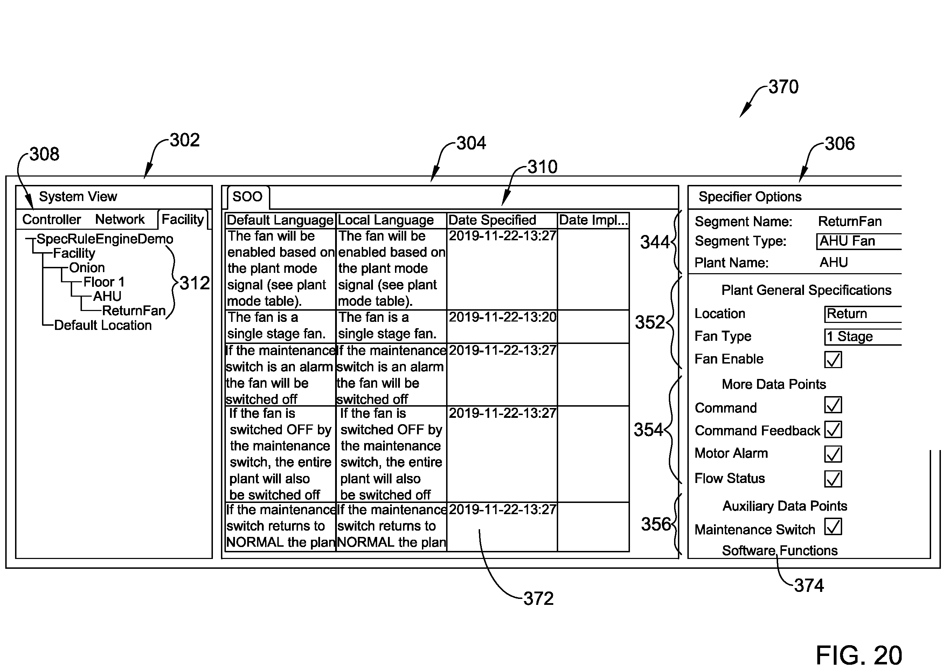

Figure 20 is a screen shot showing an illustrative screen 370 that may be displayed by the configuration system 10 and/or the engineering tool 34 when the system automatically generates and displays a Sequence Of Operations (SOO) that corresponds to the selections made thus far by the user. The SOO provides a description of how the system being configured is supposed to behave. The illustrative screen 370 includes a System View window 302, a Properties window 304 and a Specifier Options window 306. The SOO tab is now highlighted within the title bar 310 of the Properties window 304. The hierarchy 312 displayed within the System View window 302 still includes Facility\Floor1\AHU\ReturnFan. The Properties window 304 now includes a SOO Summary box 372, that provides a number of features for the SOO, including Default Language, Local Language, Date Specified, Date Implemented, Date Commissioned, Subseq Seq, Disp Seq and Change status, among others. In some cases, there may be more features listed than can be seen in a single screen, and thus a user may have to scroll horizontally and/or vertically to see all of the displayed information. It will be appreciated that as the user makes selections within the Specifier Options window 306, such as within the region 352 listing Plant General Specifications, the region 354 listing Motor Data Points, the region 356 listing Auxiliary Data points and a region 374 listing Software Functions, additional information may be automatically generated and added to the SOO Summary box 372.

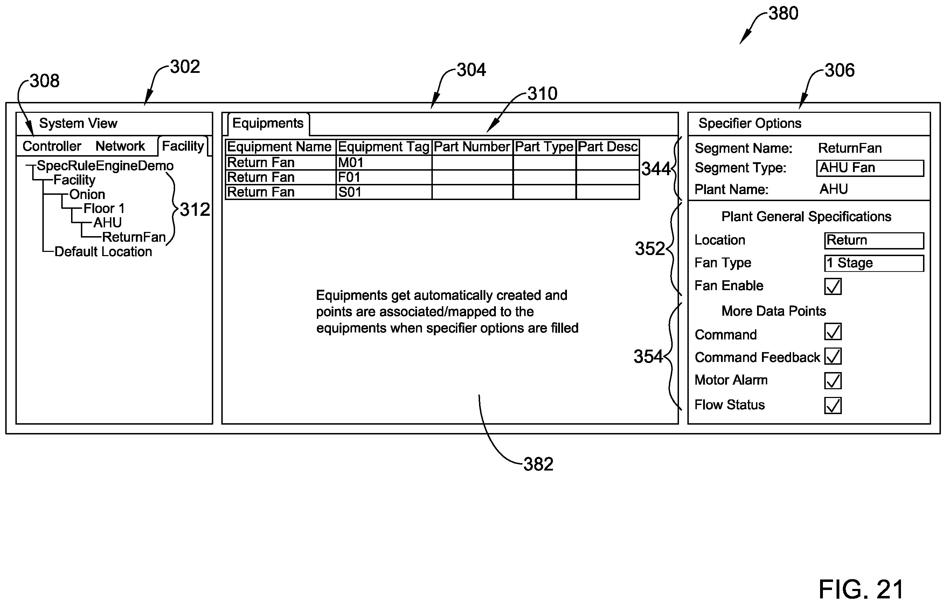

Figure 21 is a screen shot showing an illustrative screen 380 that may be displayed by the configuration system 10 and/or the engineering tool 34 when the system automatically generates and displays a list of equipments that corresponds to the selections made thus far by the user. The illustrative screen 380 includes a System View window 302, a Properties window 304 and a Specifier Options window 306. The Equipments tab is now highlighted within the title bar 310 of the Properties window 304. The hierarchy 312 displayed within the System View window 302 still includes Facility\Floor1\AHU\ReturnFan. The Properties window 304 now includes an Equipment Summary box 382 that provides information regarding the equipment that has been selected by the system as a result of the specifier options provided thus far by the user. Examples include but are not limited to Equipment Name, Equipment Tag, Part Number, Part Type, Part Description, Part Quantity, Delivery Model and so on. In some cases, there may be more features listed than can be seen in a single screen, and thus a user may have to scroll horizontally and/or vertically to see all of the displayed information. It will be appreciated that as the user makes selections within the Specifier Options window 306, such as within the region 352 listing Plant General Specifications, the region 354 listing Motor Data Points and the region 356 listing Auxiliary Data points, additional information may be automatically generated and added to the Equipments Summary box 382.

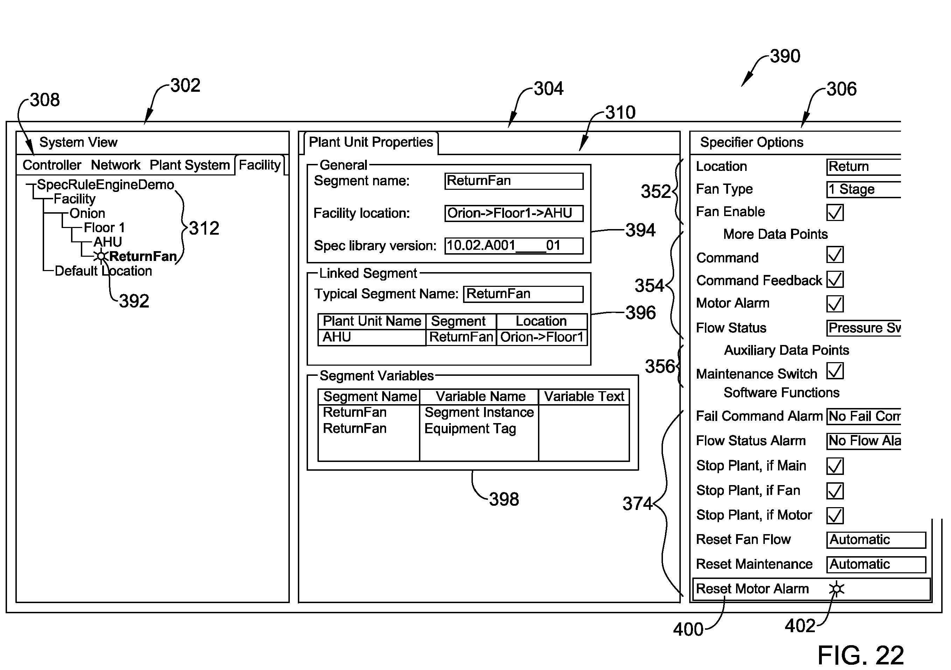

Figure 22 is a screen shot showing an illustrative screen 390 that may be displayed by the configuration system 10 and/or the engineering tool 34 that shows how the system indicates that one or more configuration settings are incomplete. The illustrative screen 390 includes a System View window 302, a Properties window 304 and a Specifier Options window 306. The Segment Properties tab is now highlighted within the title bar 310 of the Properties window 304. The hierarchy 312 displayed within the System View window 302 still includes Facility\Floor NAHU\ReturnFan, although now there is a colored warning (such as yellow) 392 displayed next to the ReturnFan listing within the hierarchy 312. This informs the user that there is additional information that needs to be entered. The Properties window 304 now includes a General information box 394, a Linked Segment information box 396 and a Segment Variables information box 398. Within the Specifier Options window 306, it can be seen that a warning box 400 identifying "Reset Motor Alarm" includes a colored warning icon such as a yellow icon 402. This helps the user to know what additional information is needed. In some cases, there may be more features listed than can be seen in a single screen, and thus a user may have to scroll horizontally and/or vertically to see all of the displayed information.

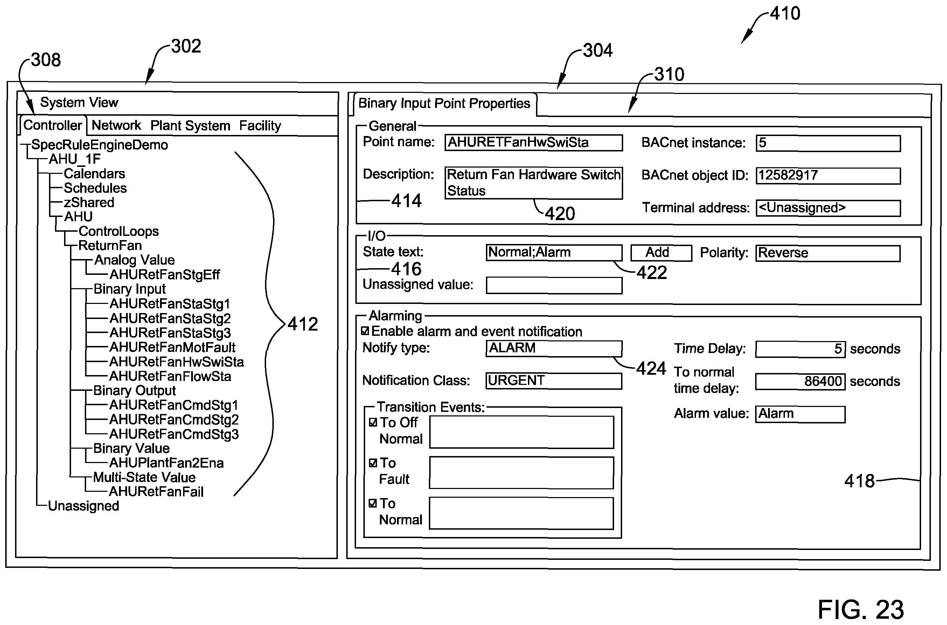

Figure 23 is a screen shot showing an illustrative screen 410 that may be displayed by the configuration system 10 and/or the engineering tool 34 showing the automatic generation of point properties for a fan switch. The illustrative screen 410 includes a System View window 302 and a Properties window 304. While not visible, the screen 410 may also include a Specifier Options window 306. In some cases, there may be more features listed than can be seen in a single screen, and thus a user may have to scroll horizontally and/or vertically to see all of the displayed information. The title bar 310 within the Properties window 304 reads "Binary Input Point Properties", which corresponds to a similar highlighted portion of a hierarch 412 displayed within the System View window 302. The Properties window 304 includes a General information box 414, an I/O information box 416 and an Alarming information box 418. It can be seen that a box 420 reading "Return Fan Hardware Switch Status" is an automatically generated point description. A box 422 reading "Normal; Alarm" is an automatically generated state text. A box 424 reading "ALARM" is an automatically generated alarm property.

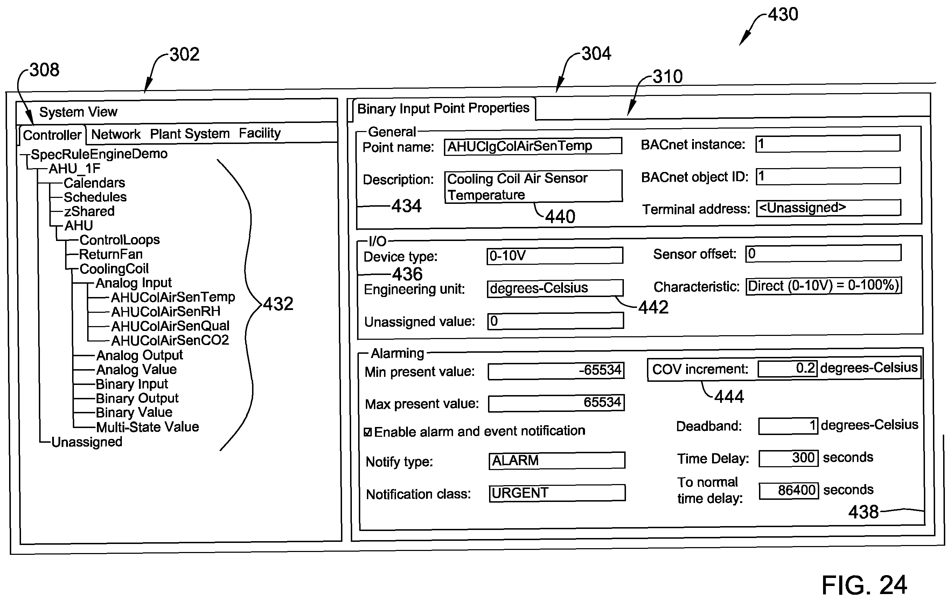

Figure 24 is a screen shot showing an illustrative screen 430 that may be displayed by the configuration system 10 and/or the engineering tool 34 showing the automatic generation of properties for a temperature sensor. The illustrative screen 430 includes a System View window 302 and a Properties window 304. While not visible, the screen 430 may also include a Specifier Options window 306. In some cases, there may be more features listed than can be seen in a single screen, and thus a user may have to scroll horizontally and/or vertically to see all of the displayed information. The title bar 310 within the Properties window 304 reads "Analog Input Point Properties". The Properties window 304 includes a General information box 434, an I/O information box 436 and an Alarming information box 438. It can be seen that a box 440 reading "Cooling Coil Air Sensor Temperature" is an automatically generated description. A box 442 reading "degrees-Celsius" is an automatically generated text with respect to engineering units. A box 444 reading "0.2" is an automatically generated property pertaining to a temperature increment.

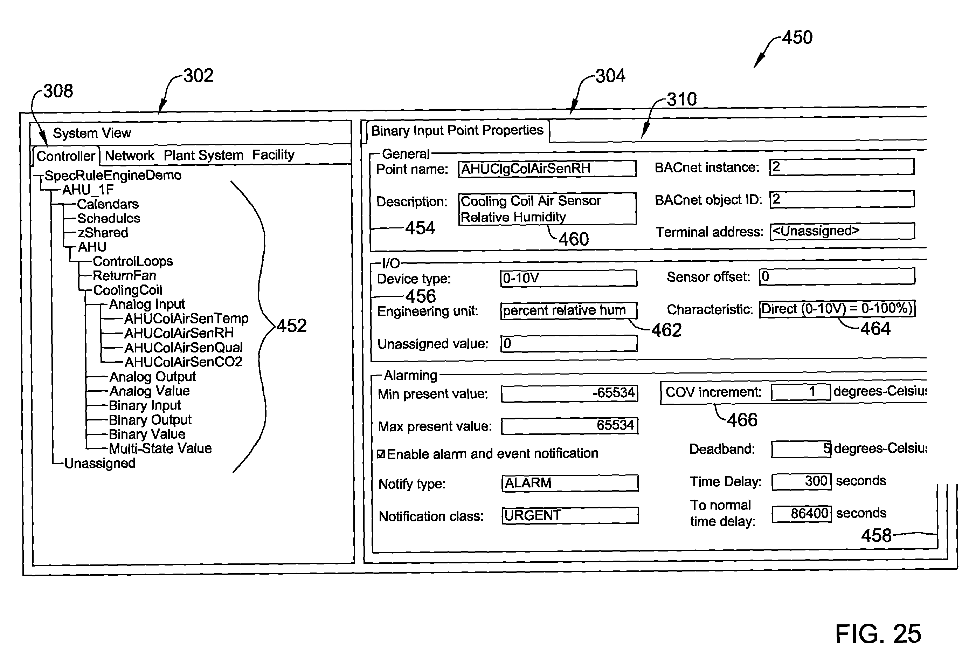

Figure 25 is a screen shot showing an illustrative screen 450 that may be displayed by the configuration system 10 and/or the engineering tool 34 showing the automatic generation of properties for a humidity sensor. The illustrative screen 450 includes a System View window 302 and a Properties window 304. The System View window 302 includes a hierarchy 452. While not visible, the screen 450 may also include a Specifier Options window 306. In some cases, there may be more features listed than can be seen in a single screen, and thus a user may have to scroll horizontally and/or vertically to see all of the displayed information. The title bar 310 within the Properties window 304 reads "Analog Input Point Properties". The Properties window 304 includes a General information box 454, an I/O information box 456 and an Alarming information box 458. It can be seen that a box 460 reading "Cooling Coil Air Sensor Relative Humidity" is an automatically generated description. A box 462 reading "percent-relative-humidity" is an automatically generated text. A box 464 describing particular characteristics is automatically generated. A box 466 pertaining to a COV increment is automatically generated.

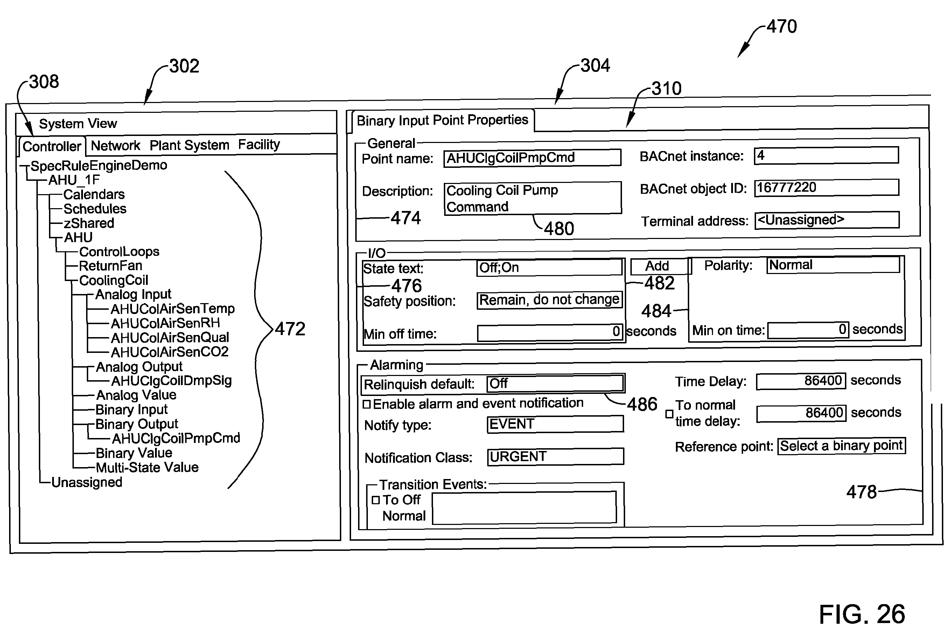

Figure 26 is a screen shot showing an illustrative screen 470 that may be displayed by the configuration system 10 and/or the engineering tool 34 showing the automatic generation of properties for a pump command. The illustrative screen 470 includes a System View window 302 and a Properties window 304. The System View window 302 includes a hierarchy 472. While not visible, the screen 470 may also include a Specifier Options window 306. In some cases, there may be more features listed than can be seen in a single screen, and thus a user may have to scroll horizontally and/or vertically to see all of the displayed information. The title bar 310 within the Properties window 304 reads "Binary Output Point Properties". The Properties window 304 includes a General information box 474, an I/O information box 476 and an Alarming information box 478. It can be seen that am information box 480 reading "Cooling Coil Pump Command" is an automatically generated description. An information box 482 and an information box 484, both within the I/O information box 476, are both automatically generated. An information box 486 is automatically generated.

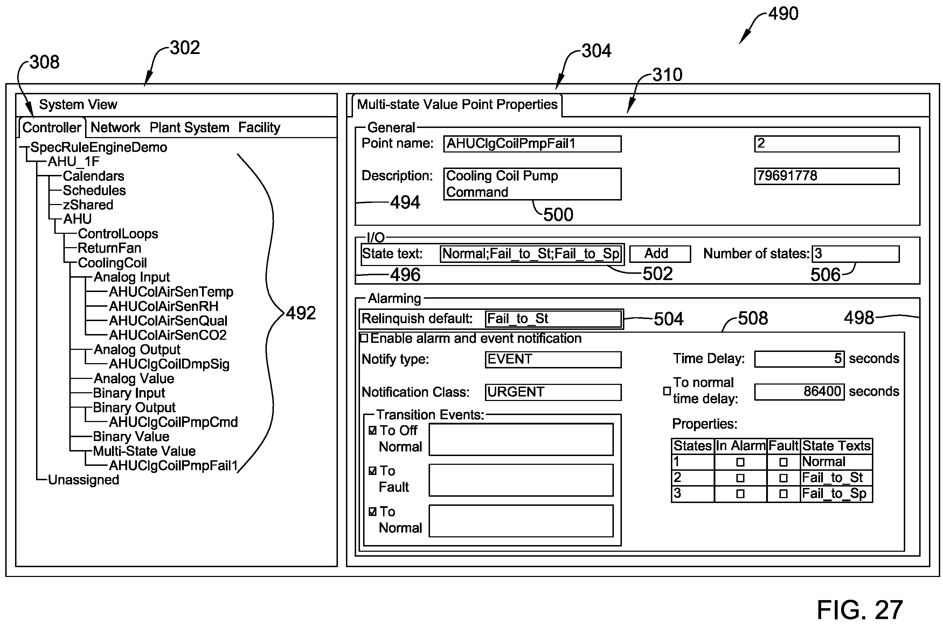

Figure 27 is a screen shot showing an illustrative screen 490 that may be displayed by the configuration system 10 and/or the engineering tool 34 showing the automatic generation of properties for a pump command. The illustrative screen 490 includes a System View window 302 and a Properties window 304. The System View window 302 includes a hierarchy 492. While not visible, the screen 490 may also include a Specifier Options window 306. In some cases, there may be more features listed than can be seen in a single screen, and thus a user may have to scroll horizontally and/or vertically to see all of the displayed information. The title bar 310 within the Properties window 304 reads "Multi-State Value Point Properties". The Properties window 304 includes a General information box 494, an I/O information box 496 and an Alarming information box 498. It can be seen that am information box 500 reading "Cooling Coil Pump Fail to Command" is an automatically generated description, as are information boxes 502, 504, 506 and 508.

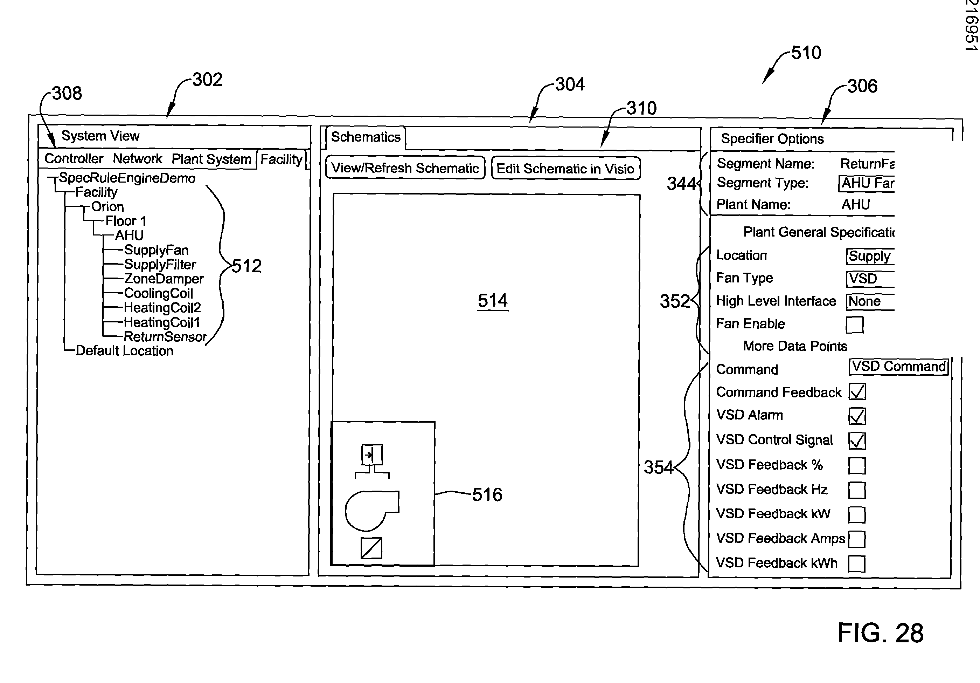

Figure 28 is a screen shot showing an illustrative screen 510 that may be displayed by the configuration system 10 and/or the engineering tool 34 showing how schematics are generated automatically as and when specifier options are selected. This particular example pertains to the segment level, and the addition of a supply fan for an AHU unit. The illustrative screen 510 includes a System View window 302, a Properties window 304 and a Specifier Options window 306. The System View window 302 includes a hierarchy 512, indicating that Supply Fan is highlighted. In some cases, there may be more features listed than can be seen in a single screen, and thus a user may have to scroll horizontally and/or vertically to see all of the displayed information. The title bar 310 within the Properties window 304 includes Segment Properties, Point Summary, SOO, Schematics, Equipments and Sync, although the Schematics tab has been selected.

The Properties window 304 includes a drawing field 514, which provides the system with a place to display schematic shapes as the user enters data within the Specifier Options window 306. As indicated in the hierarchy 512 shown in the System View window 302, this particular screen pertains to a supply fan for an AHU unit. A two dimensional schematic 516, which may include icons pertaining to related or necessary accessory devices, can be seen displayed within the drawing field 514. It will be appreciated that as the user makes selections within the Specifier Options window 306, such as within the first region 344 that identifies the particular segment, the region 352 listing Plant General Specifications and/or the region 354 listing Motor Data Points, additional schematic shapes may be automatically generated and added to the drawing field 514.

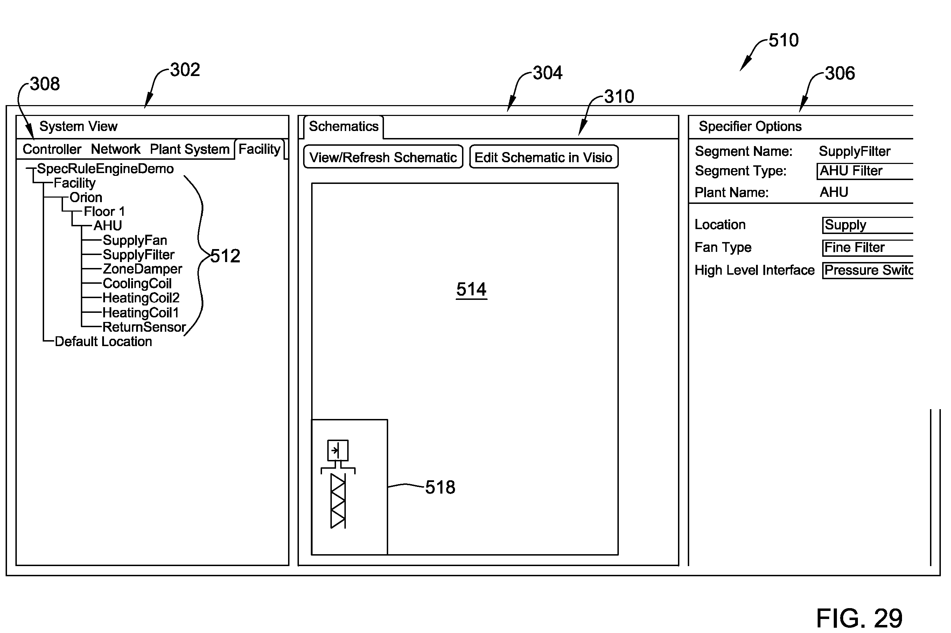

Figure 29 is a screen shot showing an illustrative screen 520 that may be displayed by the configuration system 10 and/or the engineering tool 34 showing how schematics are generated automatically as and when specifier options are selected. This particular example pertains to the segment level, and the addition of a supply filter for an AHU unit. The illustrative screen 520 includes a System View window 302, a Properties window 304 and a Specifier Options window 306. The System View window 302 includes a hierarchy 512, indicating that Supply Filter is highlighted. In some cases, there may be more features listed than can be seen in a single screen, and thus a user may have to scroll horizontally and/or vertically to see all of the displayed information. The title bar 310 within the Properties window 304 includes Segment Properties, Point Summary, SOO, Schematics, Equipments and Sync, although the Schematics tab has been selected.

The Properties window 304 includes the drawing field 514, which provides the system with a place to display schematic shapes as the user enters data within the Specifier Options window 306. As indicated in the hierarchy 512 shown in the System View window 302, this particular screen pertains to a supply filter for an AHU unit. A two dimensional schematic 518, which may include icons pertaining to related or necessary accessory devices, can be seen displayed within the drawing field 514. It will be appreciated that as the user makes selections within the Specifier Options window 306, additional schematic shapes may be automatically generated and added to the drawing field 514.

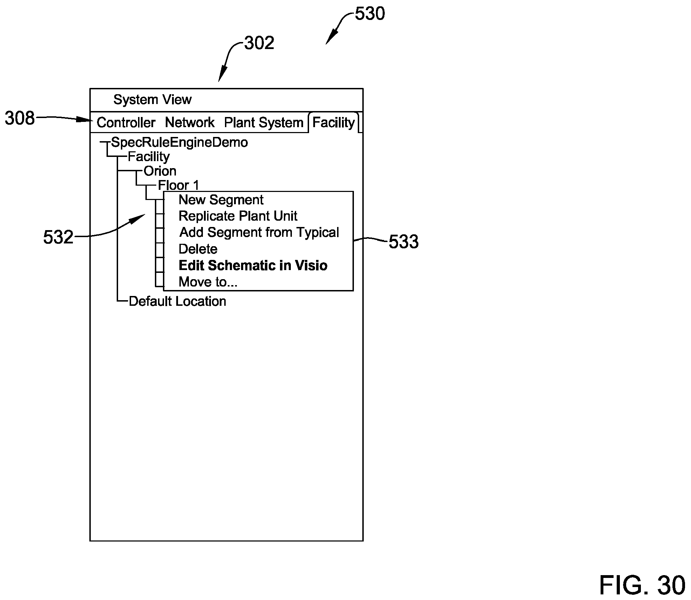

Figure 30 is a screen shot showing an illustrative screen 530 that may be displayed by the configuration system 10 and/or the engineering tool 34 showing particular menu options. The illustrative screen 530 includes a System View window 302, a Properties window 304 and a Specifier Options window 306. The System View window 302 includes a hierarchy 532, indicating that AHU is highlighted. In some cases, such as by right-clicking on the highlighted item in the hierarchy 532, the system may display a superimposed window 533 that provides the user with various editing features. As shown, the user has selected Edit Schematic in Visio^{®}, which is highlighted.

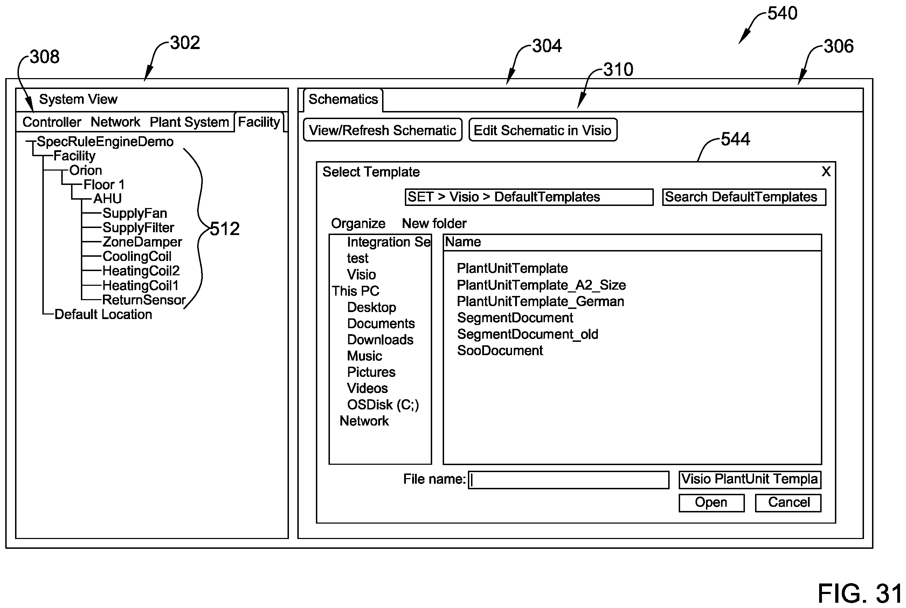

Figure 31 is a screen shot showing an illustrative screen 540 that may be displayed by the configuration system 10 and/or the engineering tool 34 showing particular menu options. The illustrative screen 530 includes a System View window 302, a Properties window 304 and a Specifier Options window 306. The System View window 302 includes a hierarchy 542, indicating that AHU is highlighted. In some cases, there may be more features listed than can be seen in a single screen, and thus a user may have to scroll horizontally and/or vertically to see all of the displayed information. The title bar 310 within the Properties window 304 includes Plant Unit Properties, Point Summary, SOO, Schematics, Equipments and Revisions, although the Schematics tab has been selected. As illustrated, the system is displaying a superimposed window 544 that enables the user to specify which previously saved plant unit schematic is to be used.

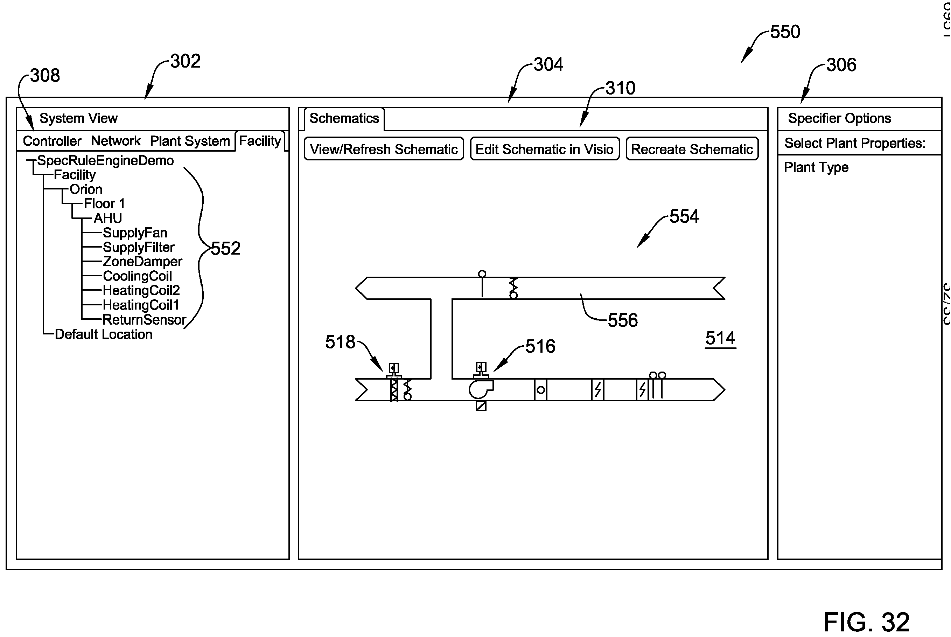

Figure 32 is a screen shot showing an illustrative screen 550 that may be displayed by the configuration system 10 and/or the engineering tool 34 showing an example of a plant unit schematic. The illustrative screen 530 includes a System View window 302, a Properties window 304 and a Specifier Options window 306. The System View window 302 includes a hierarchy 552, indicating that AHU is highlighted. In some cases, there may be more features listed than can be seen in a single screen, and thus a user may have to scroll horizontally and/or vertically to see all of the displayed information. As illustrated, the system is displaying a schematic of ductwork 554 on the drawing field 514. Multiple individual schematics are included to represent the equipment installed in or near the ductwork 554, including but not limited to the two dimensional schematic 516 (Figure 28), relating to a supply fan, and the two dimensional schematic 518 (Figure 29), relating to a filter.

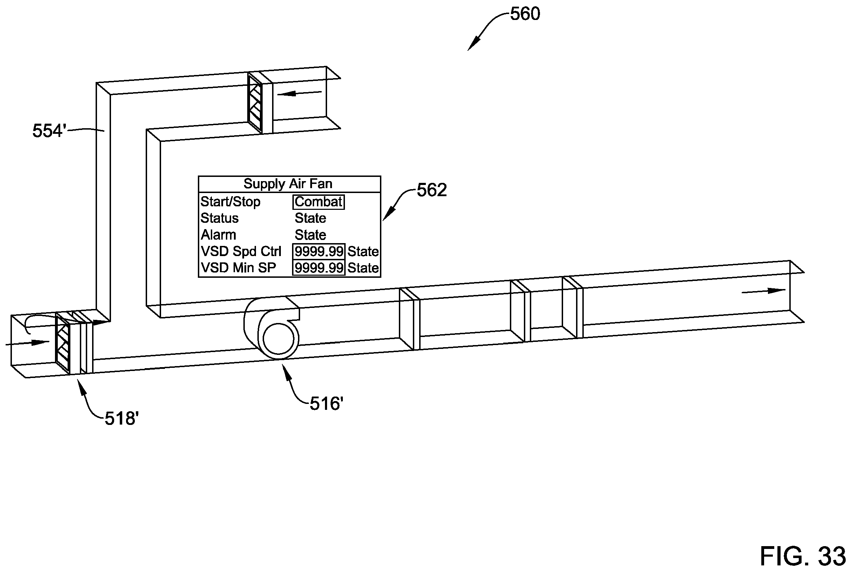

Figure 33 is a screen shot 560 that may be displayed by the configuration system 10 and/or the engineering tool 34 showing an example of plant graphics. In some cases, as shown, the graphics may be three dimensional. The screen shot 560 shows in three dimensions essentially the same elements that were shown in two dimensions in the screen shot 550 (Figure 32). A ductwork 554' is the three dimensional equivalent to the ductwork 554. A supply fan 516' is the three dimensional equivalent to the two dimensional schematic 516 while a filter 518' is the three dimensional equivalent to the two dimensional schematic 518. In some cases, the display graphics as shown in the screen shot 560 may be used to display settings or current parameter values. The screen shot 560 includes for example an information window 562 that provides details regarding the supply fan 516'.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method of building a configuration project for configuring a Heating, Ventilation and Air Conditioning (HVAC) system using a Specifier Library (18) that includes specifier options for a plurality of HVAC components (32, 32a, 32b) and a Shapes Library (20) that includes a plurality of representative Shapes and sets of properties for each of the plurality of representative Shapes, the method comprising:
an engineering tool (34) accepting a selection by a user of a plant type (44) for an HVAC component that will be part of the HVAC system (30);
automatically loading into the configuration project (24), from the Shapes Library (20), two dimensional schematics (516) that correspond to the selected plant type;
the engineering tool (34) displaying one or more segment options for the selected plant type, the one or more segment options determined by a set of segment option rules included in the Specifier Library (18);
the engineering tool (34) accepting selection by the user of one or more segment options for the selected plant type;
automatically loading into the configuration project (24), from the Shapes Library (20), two dimensional schematics corresponding to the selected one or more segment options;
the engineering tool (34) displaying one or more specifier options for the selected one or more segment options, the one or more specifier options determined by a set of specifier option rules included in the Specifier Library (18);
the engineering tool (34) accepting selection by the user of one or more specifier options;
automatically loading into the configuration project (24), from the Shapes Library (20), two dimensional schematics corresponding to the selected one or more specifier options;
the engineering tool (34) using one or more of the selected plant type, the selected segment options and the selected specifier options to automatically select one or more appropriate shapes from the Shapes Library (20) and to automatically set one or more of the properties of the selected shapes in order to create a visual representation (518, 560) of the HVAC component (32, 32a, 32b); and
wherein the engineering tool (34) is configured to indicate (392) that one or more configuration settings are incomplete.

2. The method of claim 1, wherein the sets of properties for each of the plurality of representative shapes include one or more of a shape name, a shape position, a size value, a rotation value, an equipment name and a point name.

3. The method of any one of claims 1 to 2, wherein the visual representation of the HVAC component comprises an automatically generated two dimensional schematic diagram (518) of the HVAC component (32, 32a, 32b).

4. The method of claim 3, further comprising displaying the automatically generated two dimensional schematic diagram (518) of the HVAC component (32, 32a, 32b).

5. The method of any one of claims 1 to 2, wherein the visual representation of the HVAC component (32, 32a, 32b) comprises an automatically generated three dimensional graphical diagram (560) of the HVAC component (32, 32a, 32b).

6. The method of claim 5, further comprising displaying the automatically generated three dimensional graphical diagram (560) of the HVAC component (32, 32a, 32b).

7. The method of claim 1, further comprising:
the engineering tool generating an application binary package that will ultimately be downloaded to one or more controllers of the HVAC system (30), wherein the application binary package identifies one or more of points, Sequence Of Operations, control logic, equipment, and I/O terminal assignment.

8. A system for building a configuration project for configuring a building control system, the system comprising:
a memory (16) for storing a Specifier Library (18) that includes specifier options for a plurality of building control components and a Shapes Library (20) that includes Shapes corresponding to the specifier options and sets of properties for each of the plurality of representative Shapes;
a processor (22) operatively coupled to the memory (16), the processor (22) configured to:
accept a selection by a user of a building control component that will be part of the building control system;
automatically load into the configuration project (24), from the Shapes Library (20), two dimensional schematics (516) that correspond to the selected building control component;
display one or more available segment options for the selected building control component, the one or more available segment options determined by a set of segment option rules included in the Specifier Library (18);
accept selections of one or more of the available segment options for the selected building control component;
automatically load into the configuration project (24), from the Shapes Library (20), two dimensional schematics corresponding to the selected one or more segment options;
display one or more available specifier options for the selected one or more segment options, the one or more specifier options determined by a set of specifier option rules included in the Specifier Library (18);
automatically load into the configuration project (24), from the Shapes Library (20), two dimensional schematics corresponding to the selected one or more specifier options;
automatically load Shapes from the Shapes Library (20) based on one or more of the selected building control component, the selected segment options and the selected specifier options, and to automatically set one or more of the properties of the loaded shapes;
create a displayable graphical representation (518, 560) of the building control component using the Shapes loaded from the Shapes Library (20); and
indicate (392) when one or more configuration settings for the selected building control component is incomplete.

9. The system of claim 8, further comprising outputting the displayable graphical representation (518, 560) of the selected building control component.

10. The system of any one of claims 8 to 9, wherein the displayable graphical representation (518, 560) of the selected building control component comprises a two dimensional schematic representation (518).

11. The system of any one of claims 8 to 10, wherein the displayable graphical representation (518, 560) of the selected building control component comprises a three dimensional graphical representation (560) that includes one or more updatable point values associated with the selected building control component.

## Patentansprüche

1. Verfahren zum Aufbauen eines Konfigurationsprojekts zum Konfigurieren eines Heizungs-, Lüftungs- und Klimatisierungs-(HVAC-)Systems unter Verwendung einer Planer-Bibliothek (18), die Planeroptionen für eine Vielzahl von HVAC-Komponenten (32, 32a, 32b) beinhaltet, und einer Formen-Bibliothek (20), die eine Vielzahl von repräsentativen Formen und Sätzen von Eigenschaften für jede der Vielzahl von darstellenden Formen beinhaltet, das Verfahren umfassend:
Akzeptieren, durch ein Engineering-Tool (34), einer durch einen Benutzer getroffenen Auswahl eines Anlagentyps (44) für eine HVAC-Komponente, die Teil des HVAC-Systems (30) sein wird;
automatisches Laden, in das Konfigurationsprojekt (24) aus der Formen-Bibliothek (20), von zweidimensionalen Schemas (516), die dem ausgewählten Anlagentyp entsprechen;
Anzeigen, durch das Engineering-Tool (34), einer oder mehrerer Segmentoptionen für den ausgewählten Anlagentyp, wobei die eine oder die mehreren Segmentoptionen durch einen Satz von Segmentoptionsregeln bestimmt werden, die in der Planer-Bibliothek (18) beinhaltet sind;
Akzeptieren, durch das Engineering-Tool (34), einer durch den Benutzer getroffenen Auswahl einer oder mehrerer Segmentoptionen für den ausgewählten Anlagentyp;
automatisches Laden, in das Konfigurationsprojekt (24) aus der Formen-Bibliothek (20), von zweidimensionalen Schemas, die den ausgewählten einen oder die ausgewählten mehreren Segmentoptionen entsprechen;
Anzeigen, durch das Engineering-Tool (34), einer oder mehrerer Planeroptionen für die ausgewählte eine oder die ausgewählten mehreren Segmentoptionen, wobei die eine oder die mehreren Planeroptionen durch einen Satz von Planeroptionsregeln bestimmt werden, die in der Planer-Bibliothek (18) beinhaltet sind;
Akzeptieren, durch das Engineering-Tool (34), einer durch den Benutzer getroffenen Auswahl einer oder mehrerer Planeroptionen;
automatisches Laden, in das Konfigurationsprojekt (24) aus der Formen-Bibliothek (20), von zweidimensionalen Schemas, die der ausgewählten einen oder den ausgewählten mehreren Planeroptionen entsprechen;
Verwenden, durch das Engineering-Tool (34), eines oder mehrerer von den ausgewählten Anlagetypen, den ausgewählten Segmentoptionen und den ausgewählten Planeroptionen, um automatisch eine oder mehrere geeignete Formen aus der Formen-Bibliothek (20) auszuwählen und um automatisch eine oder mehrere der Eigenschaften der ausgewählten Formen einzustellen, um eine visuelle Darstellung (518, 560) der HVAC-Komponente (32, 32a, 32b) zu erstellen; und
wobei das Engineering-Tool (34) dazu konfiguriert ist, anzugeben (392), dass eine oder mehrere Konfigurationseinstellungen unvollständig sind.

2. Verfahren nach Anspruch 1, wobei der Satz von Eigenschaften für jede der Vielzahl von darstellenden Formen eines oder mehrere von einem Formnamen, einer Formposition, einem Größenwert, einem Rotationswert, einem Gerätenamen und einem Punktnamen beinhaltet.

3. Verfahren nach einem der Ansprüche 1 bis 2, wobei die visuelle Darstellung der HVAC-Komponente ein automatisch erzeugtes zweidimensionales schematisches Diagramm (518) der HVAC-Komponente (32, 32a, 32b) umfasst.

4. Verfahren nach Anspruch 3, ferner umfassend Anzeigen des automatisch erzeugten zweidimensionalen schematischen Diagramms (518) der HVAC-Komponente (32, 32a, 32b).

5. Verfahren nach einem der Ansprüche 1 bis 2, wobei die visuelle Darstellung der HVAC-Komponente (32, 32a, 32b) ein automatisch erzeugtes dreidimensionales graphisches Diagramm (560) der HVAC-Komponente (32, 32a, 32b) umfasst.

6. Verfahren nach Anspruch 5, ferner umfassend Anzeigen des automatisch erzeugten dreidimensionalen graphischen Diagramms (560) der HVAC-Komponente (32, 32a, 32b).

7. Verfahren gemäß Anspruch 1, ferner umfassend:
Erzeugen, durch das Engineering-Tool, eines binären Anwendungspakets, das letztendlich auf eine oder mehrere Steuerungen des HVAC-Systems (30) heruntergeladen wird, wobei das binäre Anwendungspaket eines oder mehrere von Punkten, Ablaufsequenzen, Steuerungslogik, Geräten und E/A-Klemmenzuweisung identifiziert.

8. System zum Aufbauen eines Konfigurationsprojekts zum Konfigurieren eines Gebäudesteuerungssystems, das System umfassend:
einen Speicher (16) zum Speichern einer Planer-Bibliothek (18), die Planeroptionen für eine Vielzahl von Gebäudesteuerungskomponenten beinhaltet, und einer Formen-Bibliothek (20), die Formen entsprechend den Planeroptionen und Sätze von Eigenschaften für jede der Vielzahl von darstellenden Formen beinhaltet;
einen Prozessor (22), der betriebsfähig mit dem Speicher (16) gekoppelt ist, wobei der Prozessor (22) dazu konfiguriert ist:
eine durch einen Benutzer getroffene Auswahl einer Gebäudesteuerungskomponente zu akzeptieren, die Teil des Gebäudesteuerungssystems sein wird;
aus der Formen-Bibliothek (20), automatisch zweidimensionale Schemas (516), die der ausgewählten Gebäudesteuerungskomponente entsprechen, in das Konfigurationsprojekt (24) zu laden;
eine oder mehrere verfügbare Segmentoptionen für die ausgewählte Gebäudesteuerungskomponente anzuzeigen, wobei die eine oder die mehreren verfügbaren Segmentoptionen durch einen Satz von Segmentoptionsregeln bestimmt werden, die in der Planer-Bibliothek (18) beinhaltet sind;
Auswahlen einer oder mehrerer verfügbarer Segmentoptionen für die ausgewählte Gebäudesteuerungskomponente zu akzeptieren;
aus der Formen-Bibliothek (20) automatisch zweidimensionale Schemas in das Konfigurationsprojekt (24) zu laden, die der ausgewählten einen oder den ausgewählten mehreren Segmentoptionen entsprechen;
eine oder mehrere verfügbare Planeroptionen für die ausgewählte eine oder die ausgewählten mehreren Segmentoptionen anzuzeigen, wobei die eine oder die mehreren Planeroptionen durch einen Satz von Planeroptionsregeln bestimmt werden, die in der Planer-Bibliothek (18) beinhaltet sind;
aus der Formen-Bibliothek (20) automatisch zweidimensionale Schemas in das Konfigurationsprojekt (24) zu laden, die der ausgewählten einen oder den ausgewählten mehreren Planeroptionen entsprechen;
Formen automatisch aus der Formen-Bibliothek (20) zu laden, basierend auf einer oder mehreren von der ausgewählten Gebäudesteuerungskomponente, den ausgewählten Segmentoptionen und den ausgewählten Planeroptionen, und automatisch eine oder mehrere der Eigenschaften der geladenen Formen einzustellen;
eine anzeigbare graphische Darstellung (518, 560) der Gebäudesteuerungskomponente unter Verwendung der aus der Formen-Bibliothek (20) geladenen Formen zu erstellen; und
anzugeben (392), wenn eine oder mehrere Konfigurationseinstellungen für die ausgewählte Gebäudesteuerungskomponente unvollständig sind.

9. System nach Anspruch 8, ferner umfassend Ausgeben der anzeigbaren graphischen Darstellung (518, 560) der ausgewählten Gebäudesteuerungskomponente.

10. System nach einem der Ansprüche 8 bis 9, wobei die anzeigbare graphische Darstellung (518, 560) der ausgewählten Gebäudesteuerungskomponente eine zweidimensionale schematische Darstellung (518) umfasst.

11. System nach einem der Ansprüche 8 bis 10, wobei die anzeigbare graphische Darstellung (518, 560) der ausgewählten Gebäudesteuerungskomponente eine dreidimensionale graphische Darstellung (560) umfasst, die einen oder mehrere aktualisierbare Punktwerte beinhaltet, die der ausgewählten Gebäudesteuerungskomponente zugehörig sind.

## Revendications

1. Procédé de construction d'un projet de configuration pour configurer un système de chauffage, ventilation et climatisation (CVC) à l'aide d'une bibliothèque de spécifications (18) qui inclut des options de spécifications pour une pluralité de composants CVC (32, 32a, 32b) et d'une bibliothèque de formes (20) qui inclut une pluralité de formes représentatives et d'ensembles de propriétés pour chacune de la pluralité de formes représentatives, le procédé comprenant :
un outil d'ingénierie (34) acceptant une sélection par un utilisateur d'un type d'installation (44) pour un composant CVC qui fera partie du système CVC (30) ;
le chargement automatique dans le projet de configuration (24), à partir de la bibliothèque de formes (20), de schémas bidimensionnels (516) qui correspondent au type d'installation sélectionné ;
l'affichage par l'outil d'ingénierie (34) d'une ou plusieurs options de segments pour le type d'installation sélectionné, les une ou plusieurs options de segments étant déterminées par un ensemble de règles d'options de segments incluses dans la bibliothèque de spécifications (18) ;
l'acceptation par l'outil d'ingénierie (34) de la sélection par l'utilisateur d'une ou plusieurs options de segments pour le type d'installation sélectionné ;
le chargement automatique dans le projet de configuration (24), à partir de la bibliothèque de formes (20), de schémas bidimensionnels correspondant aux une ou plusieurs options de segments sélectionnées ;
l'affichage par l'outil d'ingénierie (34) d'une ou plusieurs options de spécifications pour les une ou plusieurs options de segments sélectionnées, les une ou plusieurs options de spécifications étant déterminées par un ensemble de règles d'options de spécifications incluses dans la bibliothèque de spécifications (18) ;
l'acceptation par l'outil d'ingénierie (34) de la sélection par l'utilisateur d'une ou plusieurs options de spécifications ;
le chargement automatique dans le projet de configuration (24), à partir de la bibliothèque de formes (20), de schémas bidimensionnels correspondant aux une ou plusieurs options de spécifications sélectionnées ;
l'utilisation par l'outil d'ingénierie (34) d'un ou plusieurs parmi le type d'installation sélectionné, les options de segments sélectionnées et les options de spécifications sélectionnées pour sélectionner automatiquement une ou plusieurs formes appropriées dans la bibliothèque de formes (20) et pour définir automatiquement une ou plusieurs des propriétés des formes sélectionnées afin de créer une représentation visuelle (518, 560) du composant CVC (32, 32a, 32b) ; et
dans lequel l'outil d'ingénierie (34) est configuré pour indiquer (392) qu'un ou plusieurs réglages de configuration sont incomplets.

2. Procédé selon la revendication 1, dans lequel les ensembles de propriétés pour chacune de la pluralité de formes représentatives incluent un ou plusieurs d'un nom de forme, d'une position de forme, d'une valeur de taille, d'une valeur de rotation, d'un nom d'équipement et d'un nom de point.

3. Procédé selon l'une quelconque des revendications 1 à 2, dans lequel la représentation visuelle du composant CVC comprend un schéma bidimensionnel (518) généré automatiquement du composant CVC (32, 32a, 32b).

4. Procédé selon la revendication 3, comprenant en outre l'affichage du schéma bidimensionnel (518) généré automatiquement du composant CVC (32, 32a, 32b).

5. Procédé selon l'une quelconque des revendications 1 à 2, dans lequel la représentation visuelle du composant CVC (32, 32a, 32b) comprend un schéma graphique tridimensionnel (560) généré automatiquement du composant CVC (32, 32a, 32b).

6. Procédé selon la revendication 5, comprenant en outre l'affichage du schéma tridimensionnel (560) généré automatiquement du composant CVC (32, 32a, 32b).

7. Procédé selon la revendication 1, comprenant en outre :
la génération par l'outil d'ingénierie d'un progiciel binaire d'application qui sera en fin de compte téléchargé vers un ou plusieurs contrôleurs du système CVC (30), dans lequel le progiciel binaire d'application identifie un ou plusieurs parmi points, Séquence d'Opérations, logique de contrôle, équipement et affectation de terminaux d'entrée/sortie.

8. Système de construction d'un projet de configuration pour configurer un système de contrôle de construction, le système comprenant :
une mémoire (16) pour stocker une bibliothèque de spécifications (18) qui inclut des options de spécifications pour une pluralité de composants de contrôle de construction et une bibliothèque de formes (20) qui inclut des formes correspondant aux options de spécifications et des ensembles de propriétés pour chacune de la pluralité de formes représentatives ;
un processeur (22) couplé opérationnellement à la mémoire (16), le processeur (22) étant configuré pour :
accepter une sélection par un utilisateur d'un composant de contrôle de construction qui fera partie du système de contrôle de construction ;
charger automatiquement dans le projet de configuration (24), à partir de la bibliothèque de formes (20), des schémas bidimensionnels (516) qui correspondent au composant de contrôle de construction sélectionné ;
afficher une ou plusieurs options de segments disponibles pour le composant de contrôle de construction sélectionné, les une ou plusieurs options de segments disponibles étant déterminées par un ensemble de règles d'options de segments incluses dans la bibliothèque de spécifications (18) ;
accepter des sélections parmi une ou plusieurs des options de segments disponibles pour le composant de contrôle de construction sélectionné ;
charger automatiquement dans le projet de configuration (24), à partir de la bibliothèque de formes (20), des schémas bidimensionnels correspondant aux une ou plusieurs options de segments sélectionnées ;
afficher une ou plusieurs options de spécifications disponibles pour les une ou plusieurs options de segments sélectionnées, les une ou plusieurs options de spécifications étant déterminées par un ensemble de règles d'options de spécifications incluses dans la bibliothèque de spécifications (18) ;
charger automatiquement dans le projet de configuration (24), à partir de la bibliothèque de formes (20), des schémas bidimensionnels correspondant aux une ou plusieurs options de spécifications sélectionnées ;
charger automatiquement des formes à partir de la bibliothèque de formes (20) sur la base d'un ou plusieurs du composant de contrôle de construction sélectionné, des options de segments sélectionnées et des options de spécifications sélectionnées, et pour définir automatiquement une ou plusieurs des propriétés des formes chargées ;
créer une représentation graphique affichable (518, 560) du composant de contrôle de construction à l'aide des formes chargées à partir de la bibliothèque de formes (20) ; et
indiquer (392) lorsqu'un ou plusieurs réglages de configuration pour le composant de contrôle de construction sélectionné sont incomplets.

9. Système selon la revendication 8, comprenant en outre la délivrance en sortie de la représentation graphique affichable (518, 560) du composant de contrôle de construction sélectionné.

10. Système selon l'une quelconque des revendications 8 à 9, dans lequel la représentation graphique affichable (518, 560) du composant de contrôle de construction sélectionné comprend une représentation schématique bidimensionnelle (518).

11. Système selon l'une quelconque des revendications 8 à 10, dans lequel la représentation graphique affichable (518, 560) du composant de contrôle de construction sélectionné comprend une représentation graphique tridimensionnelle (560) qui inclut une ou plusieurs valeurs de points actualisables associées au composant de contrôle de construction sélectionné.
